# EUROPÄISCHE PATENTSCHRIFT

(11) **EP 3 533 134 B1**
(45) Veröffentlichungstag und Bekanntmachung des Hinweises auf die Patenterteilung: **09.03.2022**
(21) Anmeldenummer: 18734075.7
(22) Anmeldetag: 12.06.2018
(51) Int. Cl.: H02K 15/00, H02K 3/14, H02K 3/50, H02K 15/08

(54) **VERFAHREN UND VORRICHTUNG ZUM POSITIONIEREN UND SPANNEN VON DRAHTENDEN FÜR ELEKTRISCHE MASCHINEN**
METHOD AND DEVICE FOR POSITIONING AND TENSIONING OF WIRE ENDS FOR ELECTRIC MACHINES
PROCÉDÉ ET DISPOSITIF POUR POSITIONNER ET HAUBANER LES FINS DES FILS POUR MACHINES ÉLECTRIQUES

(30) Priorität: 04.07.2017 DE 102017114932; 12.02.2018 DE 102018103100
(43) Veröffentlichungstag der Anmeldung: 04.09.2019
(73) Patentinhaber: Grob-Werke GmbH & Co. KG, 87719 Mindelheim (DE)
(72) Erfinder: REISER, Johannes, 87439 Kempten (DE); KAUFMANN, Markus, 87662 Kaltental (DE); DREIER, Günter, 86489 Deisenhausen (DE)
(74) Vertreter: KASTEL Patentanwälte PartG mbB
(86) Internationale Anmeldenummer: PCT/DE2018/100559
(87) Internationale Veröffentlichungsnummer: WO 2019/007459

(56) Entgegenhaltungen:
- EP-A2- 1 041 702
- JP-A- 2004 135 438
- US-A1- 2015 180 319
- US-A1- 2017 117 782

## Beschreibung

Die Erfindung betrifft eine Positionier- und Spannvorrichtung zum Positionieren und miteinander Verspannen von Drahtenden zwecks Weiterverarbeitung im Zuge einer Herstellung eines Maschinenelements einer elektrischen Maschine. Weiter betrifft die Erfindung eine Herstellvorrichtung zum Herstellen eines Maschinenelements einer elektrischen Maschine mit einer solchen Positionier- und Spannvorrichtung. Weiter betrifft die Erfindung ein Positionier- und Spannverfahren zum Positionieren und Spannen von Drahtenden für eine Weiterverarbeitung im Zuge einer Herstellung eines Maschinenelements einer elektrischen Maschine. Schließlich betrifft die Erfindung ein Verfahren zum Verbinden von Drahtenden im Zuge der Herstellung einer elektrischen Maschine unter Verwendung eines derartigen Positionier- und Spannverfahrens.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei der Herstellung von Maschinenelementen derartiger elektrischer Maschinen, wie beispielsweise Statoren oder Rotoren, ist es oft erforderlich, Enden von aus Drähten gebildeten Leitern miteinander zu verbinden oder sonstwie gemeinsam zu verarbeiten, wie z.B. gemeinsam zu schneiden oder zu Formen.

Zum Beispiel gibt es Elektromotoren, bei denen Spulenwicklungen, insbesondere des Stators, aus unterschiedlichen Drahtstücken gebildet werden, deren Enden dann miteinander verbunden werden.

Die US 2015/0180319 A1, die EP 1 041 702 A2, die US 2017/0117782 A1 und die JP 2004 135 438 A beschreiben Vorrichtungen zum Herstellen eines Stators, mit denen Drahtenden des Stators in Umfangsrichtung umgebogen werden können, um so Drahtpaare zu bilden, die anschließend verbunden werden können. Zum Verbiegen der Drahtenden werden diese mittels unterschiedlicher Umbiegeelemente erfasst.

So beschreibt die US 2015/0180319 eine Vorrichtung zum Herstellen eines Stators mit einem Erfassungsteil, mit dem aus einem ringförmigen Statorkern vorstehende Drahtenden erfasst und gebogen werden, um sie danach weiterzuverarbeiten, insbesondere miteinander zu verbinden. Das Erfassungsteil wird durch einen Radialrichtungsantrieb angetrieben, in dem es in radialen Schlitzen geführt wird. Eine Nocke des Erfassungsteils reicht durch den radialen Schlitz hindurch in schräg verlaufende Rillen eines motorisch angetriebenen Rings, um so die Radialbewegung anzutreiben.

Die EP 1 041 702 A2 betrifft eine Vorrichtung zum Umformen von U-förmig gebogenen Leitern, in der die geraden Abschnitte der Leiter relativ zueinander verbogen werden, wobei der U-förmige Verbindungsbereich, der die geraden Abschnitte verbindet, mittels einer Vorspannplatte festgespannt wird. Zum Umbiegen der als Drahtenden anzusehenden ersten und zweiten geradlinigen Abschnitte der U-förmig gebogenen Leiter weist die bekannte Vorrichtung ein erstes ringförmiges Element mit ersten Ausnehmungen auf, in die die ersten geradlinigen Abschnitte einer kranzförmigen Anordnung der U-förmigen Leiter eingeführt werden, und konzentrisch innerhalb des ersten ringförmigen Elements ein zweites ringförmiges Element auf, das relativ zu dem ersten Element in Umfangsrichtung verdrehbar ist und zweite Ausnehmungen aufweist, in die die zweiten geradlinigen Abschnitte eingeführt werden. Durch Verdrehung der Elemente werden die ersten geradlinigen Abschnitte in die eine Umfangsrichtung verbogen und die zweiten geradlinigen Abschnitte werden in die zweite Umfangsrichtung verbogen. Wie die so gebogenen Leiter dann in einen Stator eingefügt und weiterverarbeitet werden, ist nicht gezeigt.

Die EP 2 684 283 B1, die EP 1 554 794 B1 und die EP 1 041 696 B1 offenbaren Vorrichtungen und Verfahren zum Verbinden von Drahtenden von Hairpins zum Bilden von Statorwicklungen von elektrischen Maschinen, bei denen die Drahtenden miteinander verschweißt werden. Hierbei sind Vorrichtungen und Verfahren zum Positionieren und Verspannen der Drahtenden vor dem Verschweißen vorgesehen.

Die Erfindung hat sich zur Aufgabe gestellt, derartige Vorrichtungen und Verfahren zum Positionieren und Verspannen von Drahtenden insbesondere hinsichtlich der Genauigkeit und eines geringeren konstruktiven Aufwands zu verbessern.

Zum Lösen dieser Aufgabe schafft die Erfindung eine Positionier- und Spannvorrichtung sowie ein Positionier und Spannverfahren gemäß den beigefügten unabhängigen Ansprüchen. Vorteilhafte Verwendungen sind in den Nebenansprüchen angegeben.

Vorteilhafte Ausgestaltungen sind Gegenstand der Unteransprüche.

Die Erfindung schafft gemäß einem ersten Aspekt eine Positionier- und Spannvorrichtung zum Positionieren und Spannen wenigstens eines Drahtendes - vorzugweise zum Relativpositionieren und miteinander Verspannen von mehreren Drahtenden, wie z.B. eines Drahtendenpaares oder eine Triples aus Drahtenden - zwecks Weiterverarbeitung im Zuge einer Herstellung eines Maschinenelements einer elektrischen Maschine, umfassend: eine Fangeinrichtung zum Fangen und Positionieren des Drahtendes oder der Drahtenden, wobei die Fangeinrichtung wenigstens eine Schrägführung zum relativen Positionieren der Drahtenden aufweist.

Es ist bevorzugt, dass die wenigstens eine Schrägführung bei Relativbewegung in Umfangsrichtung der Positionier- und Spannvorrichtung ein Führen des wenigstens einen Drahtendes in eine Radialrichtung bewirkt.

Es ist bevorzugt, dass eine erste Schrägführung, die sich in eine Umfangsrichtung der Positionier- und Spannvorrichtung und in eine Radialrichtung erstreckt, und eine weitere Schrägführung, die sich in eine axiale Richtung und in eine Radialrichtung erstreckt, vorgesehen sind.

Es ist erfindungsgemäß vorgesehen, dass die Fangeinrichtung ein erstes Element mit einer ersten Ausnehmung und ein zweites Element mit einer zweiten Ausnehmung aufweist.

Es ist erfindungsgemäß vorgesehen, dass das erste und das zweite Element relativ zueinander bewegbar sind, wobei die Ausnehmungen sich zumindest teilweise derart überlagern, dass das wenigstens eine Drahtende darin einführbar ist und Berandungen der Ausnehmungen sich im Zuge der Relativbewegung zueinander annähern oder entfernen.

Es ist erfindungsgemäß vorgesehen, dass wenigstens eine Berandung an wenigstens einer der Ausnehmungen sich zumindest teilweise schräg erstreckt, um die wenigstens eine Schrägführung zu bilden.

Es ist bevorzugt, dass gegenüberliegende Berandungen wenigstens einer der Ausnehmungen einen trichterförmigen Einführschrägbereich bilden.

Es ist bevorzugt, dass sowohl an der ersten Ausnehmung als auch an der zweiten Ausnehmung eine Schrägführung derart vorgesehen ist, dass die Schrägführungen der ersten und der zweiten Ausnehmung miteinander zusammenwirken.

Es ist bevorzugt, dass sich wenigstens eine erste Berandung der ersten Ausnehmung zumindest teilweise schräg erstreckt und sich wenigstens eine mit der ersten Berandung überlagernde erste Berandung der zweiten Ausnehmung zumindest teilweise schräg erstreckt, wobei die Neigungsrichtungen der sich schräg erstreckenden Bereiche der ersten und zweiten Ausnehmung entgegengesetzt sind.

Es ist bevorzugt, dass gegenüberliegende Berandungen der ersten Ausnehmung einen ersten trichterförmigen Einführschrägbereich bilden und gegenüberliegende Berandungen der zweiten Ausnehmung einen zweiten trichterförmigen Einführschrägbereich bilden, wobei die Einführschrägbereiche entgegengesetzt zueinander angeordnet sind.

Es ist bevorzugt, dass die wenigstens eine sich zumindest teilweise schräg erstreckende Berandung eine sich in Umfangsrichtung erstreckende Berandung ist.

Es ist bevorzugt, dass das erste und/oder das zweite Element als Scheibe oder Ringscheibe oder als Scheibensegment oder Ringscheibensegment ausgebildet sind.

Es ist bevorzugt, dass das erste und das zweite Element um eine gemeinsame Drehachse relativ zueinander verdrehbar sind.

Es ist bevorzugt, dass eine Mehrzahl erster und zweiter Ausnehmungen um eine Achse herum verteilt angeordnet sind, wobei mehrere erster und/oder zweiter Elemente vorgesehen sind, die relativ zueinander radial zu der Achse beweglich sind.

Es ist bevorzugt, dass die Fangeinrichtung selbst bereits zum Fixieren und Spannen des wenigstens einen Drahtendes ausgebildet ist. Insbesondere sind das wenigstens eine Drahtende oder das Paar oder Triple von Drahtenden zwischen dem oben erwähnten ersten Element und dem oben erwähnten zweiten Element der Fangeinrichtung nicht nur vorpositionierbar sondern auch in ihrer Position fixierbar und spannbar.

Bei einer beanspruchten Ausführungsvariante ist erfindungsgemäß vorgesehen, dass zusätzlich zu der Fangeinrichtung weiter eine Fixier- und Spanneinrichtung zum Fixieren und Spannen des mittels der Fangeinrichtung vorpositionierten wenigstens einen Drahtendes vorgesehen ist.

Es ist bevorzugt, dass die Fixier- und Spanneinrichtung ein relativ zu der Fangeinrichtung bewegbares Fixier- und Spannelement zum Fixieren und Spannen des wenigstens einen Drahtendes zwischen der Fangeinrichtung und dem Fixier- und Spannelement aufweist.

Es ist bevorzugt, dass die Fixier- und Spanneinrichtung ein Fixier- und Spannelement und einen Gegenhalter aufweist, die relativ zueinander zum Fixieren und Spannen des wenigstens eine Drahtendes dazwischen bewegbar sind.

Es ist bevorzugt, dass die Fixier- und Spanneinrichtung als Fixier- und Spannelement einen bewegbar angetriebenen Stempel aufweist.

Es ist bevorzugt, dass die Fangeinrichtung und die Fixier- und Spanneinrichtung mit einem gemeinsamen Antrieb oder gekoppelten Antrieben zum Durchführen des Fangens, Vorpositionierens, Fixierens und Spannens im Zuge einer Bewegung versehen sind oder dass die Fangeinrichtung und die Fixier- und Spanneinrichtung unabhängig voneinander bewegbar sind.

Es ist bevorzugt, dass eine Einführhilfeeinrichtung zum axialen Einführen von Drahtenden in die Fangeinrichtung mit wenigstens einer sich in axialer Richtung erstreckenden Einführhilfe und/oder einer sich in axialer Richtung erstreckenden Einführschräge und/oder einem sich in axialer Richtung erstreckenden Einführtrichter vorgesehen ist.

Es ist bevorzugt, dass die Einführhilfeeinrichtung stationär ausgebildet ist und die Fangeinrichtung wenigstens ein zu der Einführhilfeeinrichtung bewegbares oder drehbares Element aufweist.

Es ist bevorzugt, dass die Fangeinrichtung und/oder die Fixier- und Spanneinrichtung und/oder die Einführhilfeeinrichtung als Einzeleinrichtung zur Handhabung eines Drahtendpaares ausgebildet ist.

Alternativ ist bevorzugt, dass die Fangeinrichtung und/oder die Fixier- und Spanneinrichtung und/oder die Einführhilfeeinrichtung jeweils als Mehrfacheinrichtung zur gleichzeitigen Handhabung einer Mehrzahl von Drahtendpaaren ausgebildet sind.

Es ist bevorzugt, dass die Fangeinrichtung und die Fixier- und Spanneinrichtung mit einem gemeinsamen Antrieb oder gekoppelten Antrieben zum Durchführen des Fangens, Vorpositionierens, Fixierens und Spannens im Zuge einer Bewegung versehen sind. Alternativ ist bevorzugt, dass die Fangeinrichtung und die Fixier- und Spanneinrichtung unabhängig voneinander bewegbar sind.

Erfindungsgemäß ist vorgesehen, dass die Fangeinrichtung selbst nicht nur zum Fangen und Vorpositionieren, sondern zum Spannen und Fixieren von Drahtenden ausgebildet ist. Dies erfolgt insbesondere durch eine Relativbewegung eines ersten und eines zweiten Elements der Fangeinrichtung mit zusammenwirkenden Ausnehmungen, bei denen zumindest an einem Element eine Schrägführung an einer Berandung ausgebildet ist, um die Drahtenden in einen engeren Überlappungsbereich der teilweise überlappenden Ausnehmungen zu überführen, wo sie zwischen gegeneinander gerichteten Endkanten der Ausnehmungen fixiert und gespannt werden.

Gemäß einem weiteren Aspekt schafft die Erfindung eine Herstellvorrichtung zum Herstellen eines Maschinenelements einer elektrischen Maschine, umfassend eine Positionier- und Spannvorrichtung nach einer der voranstehenden Ausgestaltungen und eine Verarbeitungseinrichtung, insbesondere Schweißeinrichtung, Schneideinrichtung und/oder Formeinrichtung zum (gemeinsamen) Verarbeiten des gespannten Drahtendes bzw. der verspannten Drahtenden.

Besonders bevorzugt ist die Herstellvorrichtung zum Herstellen einer Spulenwicklung der elektrischen Maschine ausgebildet. Die Herstellvorrichtung kann auch zum Herstellen eines Stators mit einer Spulenwicklung ausgebildet sein.

Gemäß einem weiteren Aspekt schafft die Erfindung ein Positionier- und Spannverfahren zum Positionieren und Spannen wenigstens eines Drahtendens - vorzugweise zum Relativpositionieren und miteinander Verspannen von mehreren Drahtenden, wie z.B. eines Drahtendenpaares oder eines Triples aus Drahtenden - zwecks Weiterverarbeitung im Zuge einer Herstellung eines Maschinenelements einer elektrischen Maschine -, umfassend den Schritt a) Fangen und Positionieren des/der Drahtende(s/n), wobei Schritt a) mittels wenigstens einer Schrägführung erfolgt, mittels der das wenigstens eine Drahtende geführt wird.

Es ist bevorzugt, dass Schritt a) umfasst:
a1) Fangen des/der Drahtende(s/n), Überführen des/der Drahtenden in eine Fixierposition, insbesondere Annähern der Drahtenden zueinander in einer Fixierposition, und Halten des/der Drahtende(s/n) in der Vorposition.

Es ist bevorzugt, dass Schritt a) umfasst:
a2) Relativbewegen eines ersten Elements mit wenigstens einer ersten Ausnehmung und eines zweiten Elements mit wenigstens einer zweiten Ausnehmung.

Es ist bevorzugt, dass Schritt a) umfasst:
a3) Fangen und Positionieren zwischen sich zueinander bewegenden Berandungen der ersten und der zweiten Ausnehmung, wobei wenigstens eine der sich relativ bewegenden Berandungen zumindest teilweise schräg verläuft.

Es ist bevorzugt, dass Schritt a) umfasst:
a4) Fangen und Positionieren mittels einer Einführschräge.

Es ist bevorzugt, dass Schritt a) umfasst:
a5) Fangen und Positionieren zwischen sich trichterförmig gegenüberliegenden schrägen Berandungen.

Es ist bevorzugt, dass Schritt a) umfasst:
a6) Fangen und Positionieren mittels sich gegenläufig erstreckender und gegenläufig relativ zueinander bewegbaren Einführschrägen.

Es ist bevorzugt, dass Schritt a) umfasst:
a7) Fangen und Positionieren mittels zueinander geöffneter und gegenläufig relativ zueinander bewegbaren Einführtrichtern.

Es ist bevorzugt, dass einzelne Drahtenden oder Drahtendenpaare einzeln positioniert und gespannt werden.

Es ist bevorzugt, dass eine Gruppe mehrerer einzelner Drahtenden oder mehrerer Drahtendenpaare gemeinsam positioniert oder gespannt werden.

Es ist bevorzugt, dass Schritt a) zum Fangen und Vorpositionieren des wenigstens einen Drahtendes durchgeführt wird und weiter der Schritt b) Fixieren und Spannen des wenigstens einen vorpositionierten Drahtendes vorgesehen ist.

Es ist bevorzugt, dass Schritt b) umfasst:
b1) Verbringen des in Schritt a) vorpositionierten wenigstens einen Drahtendes in ihre für die Weiterverarbeitung erwünschte Lage.

Es ist bevorzugt, dass Schritt b) umfasst:
b2a) Aufbringen einer Spannkraft auf das wenigstens eine Drahtende zwischen einem ersten und einem zweiten Element einer Fangeinrichtung, wobei die Elemente zueinander relativ beweglich oder zueinander drehbar sind und wobei an wenigstens einem der Elemente der Fangeinrichtung die wenigstens eine Schrägführung vorgesehen ist.

Die Durchführung von Schritt b2a) ist derzeit bevorzugt, da so das Positionieren und Fixieren und Spannen in einer einzelnen Einrichtung durchgeführt werden können. Schritt b) kann alternativ zu dem Schritt b2a) aber auch den Schritt b2b) und/oder den Schritt b2c) umfassen:
b2b) Aufbringen einer Spannkraft auf das wenigstens eine Drahtende zwischen einer zum Durchführen von Schritt a) ausgebildeten Fangeinrichtung und einem hierzu beweglichen Fixier- und Spannelement oder
b2c) Aufbringen einer Spannkraft auf das wenigstens eine Drahtende zwischen einem gesondert zu einer Fangeinrichtung zum Durchführen von Schritt a) vorgesehenen Fixier- und Spannelement und einem gesondert vorgesehenen Gegenhalter.

Es ist bevorzugt, dass die Schritte a) und b) in einer gemeinsamen Bewegung durchgeführt werden.

Bei einer Ausgestaltung des Verfahrens ist vorgesehen, dass Drahtenden oder Drahtendenpaare einzeln positioniert und gespannt werden.

Es ist jedoch bevorzugt, dass eine Gruppe mehrerer einzelner Drahtenden oder Drahtendenpaare gemeinsam positioniert oder gespannt werden.

Gemäß einem weiteren Aspekt schafft die Erfindung ein Verfahren zum Verbinden von Drahtenden im Zuge der Herstellung einer elektrischen Maschine, umfassend Durchführen eines Positionier- und Spannverfahrens nach einer der voranstehenden Ausgestaltungen und Verbinden der verspannten Drahtenden, insbesondere mittels Schweißen.

Es ist bevorzugt, dass die Drahtenden von Hairpins im Zuge der Herstellung eines Stators einer elektrischen Maschine verbunden werden.

Besonders bevorzugt sind die hier beschriebenen Verfahren und Vorrichtungen in den Verfahren zur Herstellung von Spulenwicklungen von elektrischen Maschinen einsetzbar, wie sie in der EP 2 684 283 B1, der EP 1 554 794 B1 und der EP 1 041 696 B1 beschrieben und gezeigt sind, so dass für weitere Einzelheiten auf diese Druckschriften verwiesen werden kann. Gegenüber diesem Stand der Technik zeichnen sich besonders bevorzugte Ausgestaltungen der hier vorgestellten Verfahren und Vorrichtungen durch eine exaktere oder konstruktiv und verfahrenstechnisch einfachere Positionierung und Verspannung der Drahtenden aus.

Die hier dargestellten Positionier- und Spannverfahren sind aber nicht nur zur Positionierung von Drahtenden vor einem Verschweißen, sondern auch zum Positionieren von Drahtenden für andere Weiterverarbeitungsverfahren geeignet.

Insbesondere betreffen bevorzugte Ausgestaltungen der Erfindung eine Fixierungssystematik von einem oder mehreren Drahtenden (runder, eckiger oder mit jeglicher anderer Kontur) zum Formen, Bearbeiten, Schneiden oder Schweißen.

Aufgrund der nicht exakten Position und einer prozessbedingten hochgenauen Spannung der Drahtenden wird häufig eine sehr aufwändige Spannvorrichtung benötigt.

Für einige Verarbeitungsschritte müssen Drahtenden von einer nicht exakt definierten Position in eine exakte Lage zum Weiterverarbeiten gebracht werden. Dies erfolgt normalerweise mit einer definierten Spannsystematik.

Bei einer bevorzugten Ausgestaltung wird der Draht erst in einer Fangeinrichtung gefangen und anschließend über eine Schrägführung in eine Fixierposition gebracht, wo er gespannt wird und in seiner Lage festgehalten wird. Insbesondere werden Drahtenden gemeinsam gefangen und dann über die Schrägführung in eine exakte Lage gebracht und miteinander gespannt. Dies kann insbesondere über zwei relativ zueinander bewegliche sich überlappende Ausnehmungen erfolgen, wobei wenigstens eine erste Ausnehmung einen breiteren Bereich und einen engeren Bereich und an wenigstens einer Berandung eine Schrägführung aufweist, wobei das Überführen von dem weiteren in den engeren Bereich und das Verspannen über Relativbewegung der Ausnehmungen erfolgt.

Bei einer Ausgestaltung können die erste und die zweite Ausnehmung einen breiteren Bereich und einen engeren Bereich aufweisen, die bei der ersten und zweiten Ausnehmung jeweils an entgegengesetzten Enden ausgebildet sind.

Die Schrägführung kann einseitig nur an einer der beiden Berandungen zwischen dem engeren und dem breiteren Bereich der wenigstens einen Ausnehmung vorgesehen sein oder kann an gegenüberliegenden Berandungen vorgesehen sein, so dass sich ein Einführtrichter ergibt.

Bei einer anderen Ausgestaltung der Erfindung teilt sich der Prozess in zwei Schritte auf.
a) Fangen und Vorpositionieren
   - Der Draht wird über eine mechanische Vorrichtung eingefangen und in eine noch nicht exakt definierte Position gebracht.
   - Die Drahtenden werden grob in der Lage gehalten aber noch nicht gespannt.
b) Fixieren und Spannen
   - Anschließend wird mit einer mechanischen Lösung der Draht oder die Drähte gegen die Fangvorrichtung oder mit separaten Gegenhaltern in eine exakte Lage gebracht und somit auch gespannt.
   - Die Spannkraft zur exakten Positionierung und Fixierung wird somit im Schritt b) aufgebracht.

Die Fang- und auch die Fixiervorrichtung kann, als Einzelvorrichtung oder auch als Vorrichtung, die mehrere Drahtenden oder Bündel fasst, ausgeführt sein.

Der Fang- und Fixiervorgang kann mit einer Bewegung oder auch mit mehreren Bewegungen betätigt werden.

Das Fangen der Drähte kann auf schiefen Ebenen mit zwei gegenläufigen Elementen erfolgen.

Das Fangen kann mit einer beliebigen Form (z. B. Einführschräge) erfolgen.

Das Spannen kann mit einem Stempel oder einer beliebig anderen Form erfolgen.

Allgemein kann das hier dargestellte Spannprinzip auf beliebige Drahtverarbeitung angewendet werden. Besonders bevorzugt wird es konkret für ein Spannen von in den Stator eines Elektromotors gesteckten Hairpins bzw. sonstigen Drahtenden vor dem Verschweißen eingesetzt.

Besonders bevorzugte Ausgestaltungen betreffen eine Vorrichtung und ein Verfahren zum Spannen von zu verschweißenden Drahtenden.

Vorzugsweise sollen die Drahtenden sehr exakt, im Mikrometerbereich, positioniert werden.

Vorzugsweise sind die Vorrichtung und das Verfahren dazu ausgebildet, die Drähte, z.B. solche welche sich in den Nuten eines Stators befinden, zu Drahtpaaren zu spannen und zu positionieren, um sie zu verschweißen.

Vorzugsweise werden die Drahtpaare in radialer und axialer Richtung so miteinander gespannt und positioniert, dass die durch den jeweiligen Schweißprozess vorgegebenen Anforderungen an die Positionierung der beiden Schweißpartner entsprechend erfüllt werden.

Eine bevorzugte Ausgestaltung einer Fangeinrichtung weist wenigstens zwei übereinander angeordnete Elemente auf. Die übereinander angeordneten Elemente bewegen sich gegenläufig zueinander, um die ungeordneten Drahtenden zu Paaren zusammen zu spannen. In die Elemente sind entsprechend geformte Aussparungen eingearbeitet.

Vorzugsweise besitzt die Aussparung eines ersten Elements eine rechteckige Form. Vorzugsweise besitzt die Aussparung des sich gegenläufig bewegenden zweiten Elements eine oder zwei schräg ausgeführte Flächen. Vorzugsweise münden diese in eine rechteckige Form ein.

Die Positionier- und Spannvorrichtung ist vorzugsweise relativ zu einem Maschinenelement, von dem die Drahtenden vorstehen, relativ bewegbar. Z.B. ist ein Stator mit in Nuten des Stators eingesetzten Drähten wie insbesondere Hairpins vorgesehen, auf den die Positionier- und Spannvorrichtung aufgesetzt wird.

Die beiden entsprechend geformten Aussparungen in den Elementen befinden sich zum Zeitpunkt, bei dem die Vorrichtung auf das Maschinenelement, z.B. den Stator, mit den nicht ausgerichteten Drähten aufgesetzt wird, direkt übereinander.

Die nicht ausgerichteten Drähte befinden sich demnach undefiniert innerhalb der beiden Aussparungen der Elemente. Sobald sich die beiden Elemente gegenläufig zueinander bewegen, werden die Drähte durch eine an wenigstens einer der Aussparung ausgebildete Schrägführung zueinander positioniert.

Zum Beispiel werden die Drähte durch die rechteckige Aussparung eines Elements, entlang der Schräge(n) der Aussparung eines anderen Elements, in eine einmündende rechteckige Form des anderen Elements geschoben.

Bei einer bevorzugten Ausgestaltung ist der Ausrichtvorgang beendet, sobald sich das Drahtpaar in der rechteckigen Form des anderen Elements befindet. Bei dieser Ausgestaltung können die positionierten Drahtpaare demnach in dieser Stellung der Vorrichtung verarbeitet, z.B. miteinander verschweißt werden.

Bei bisher angestellten Überlegungen zum Positionieren und Spannen von Drahtenden benötigt der Ausricht-Vorgang der Drahtpaare mehrere getrennt anzutreibende einzelne Vorrichtungen. Zum einen werden gegenläufig rotierende Scheiben und zum anderen radial angeordnete Greifer benötigt. Die Greifer zum Ausrichten in tangentialer Richtung sind aufgrund von Platzmangel schwierig auszuführen und aufwändig zu bewegen.

Ein Vorteil einer bevorzugten Ausgestaltung der Erfindung liegt darin, dass der Ausricht-Vorgang der zu verschweißenden Drahtpaare in nur einem Schritt ausgeführt wird. Es sind demnach keine zusätzlichen Elemente zum Ausrichten in tangentialer Richtung erforderlich.

Die Elemente der Positionier- und Spannvorrichtung können bei einer Ausgestaltung tangential zum Stator bewegbar ausgebildet sein. Dies ist beispielsweise mit Scheiben oder Ringscheiben realisierbar, die sich relativ zueinander um die Mittelachse des Stators drehen können.

Bei einer anderen Ausgestaltung bewegen sich die Elemente der Positionier- und Spannvorrichtung radial zum Stator. Dies ist beispielsweise dadurch realisierbar, dass die Ausnehmungen bzw. Aussparungen zum Fangen der Drahtenden bei wenigstens einem der Elemente auf mehrere Segmente verteilt sind, die sich relativ zu dem anderen Element radial bewegen können.

Vorzugsweise kann das Positionieren und Spannen der Drahtenden allein mittels zwei übereinander angeordneten rotierenden Scheiben als Elemente der Fangeinrichtung erfolgen.

Die Ausschnitte einer oder vorzugsweise beider Spannscheiben können trapezförmig sein.

Bei einer vorteilhaften Ausgestaltung ist vorgesehen, dass eine weitere Scheibe vorgesehen werden kann, die vorzugsweise nicht beweglich ist, und in die Einführungsfasen eingearbeitet sind, durch die die Drahtenden vor dem Positionieren "eingefangen" werden, d.h. eine Positionierung in der Form stattfindet, dass die Drahtenden in die Ausschnitte der beiden Spannscheiben gelangen können.

Vorzugsweise dient die Positionier- und Spannvorrichtung zum Positionieren und Spannen von Drahtenden, die aus einem Gehäuse eines Bauteils, vorzugsweise einer elektrischen Maschine im Zuge eines Herstellschritts, herausragen. Insbesondere stehen bei einem Gehäuse eines Stators, bei dem Spulenwicklungen mittels Hairpins hergestellt werden, die Enden der Hairpins nach dem Einfügen in Nuten des Gehäuses hervor. Dann werden durch Umbiegen benachbarter Enden in entgegengesetzter Umfangsrichtung Paare von Drahtenden gebildet, die miteinander verbunden werden sollen, um so Spulenwicklungen zu bilden.

Demnach ist die Positionier- und Spannvorrichtung mit ringförmigen Anordnungen von Ausnehmungen versehen, die zueinander verdrehbar sind, um die hervorstehenden Enden einer Vielzahl von Drahtendengruppen zu verspannen (z.B. entspricht die Anzahl der miteinander zu verspannenden Drahtenden der Anzahl von Nuten mal einer natürlichen Zahl, die davon abhängt, wieviele Drahtsegmente in jeder Nut aufgenommen sind).

Bei der erfindungsgemäßen Vorrichtung ist das Bauteil mit vorstehenden Drahtenden in Richtung der Drahtendenerstreckung (z.B. axial bei einem ringförmigen Bauteil) relativ zu der Positionier- und Spannvorrichtung bewegbar.

Zum Einführen der Drahtenden in Ausnehmungen der Positionier- und Spannvorrichtung sind vorzugsweise Einführfasen vorgesehen, die sich schräg zur Relativbewegungsrichtung beim Einführen erstrecken. Vorzugsweise sind die Einführfasen trichterförmig angeordnet, so dass sie das Einführen in die Ausnehmungen bei der Relativbewegung erleichtern. Die Relativbewegung erfolgt bei einem ringförmigen Gehäuse mit über den Umfang verteilt vorstehenden Drahtenden vorzugsweise in axialer Richtung (relativ zu einer Mittelachse des Gehäuses gesehen).

Z.B, werden Hairpins durch die Einführfasen in den fluchtenden Ausnehmungen eines ersten und eines zweiten, vorzugsweise als Scheiben, z.B. Spannscheiben, ausgebildeten Elements einer Fangeinrichtung eingeführt. Die Einführfasen können z.B. an einem stationären Element, insbesondere an einer Grundplatte vorgesehen sein, an dem das erste und das zweite Element der Fangeinrichtung beweglich, insbesondere drehbar, mehr insbesondere um eine gemeinsame Drehachse, die bei der Durchführung des Verfahrens mit der Mittelachse des Gehäuses zusammenfallend angeordnet wird, drehbar gelagert sind.

Vorzugsweise ist die Fixier- und Spannvorrichtung insbesondere als Schweißschablone oder Schweißlehre zum Verschweißen von Drahtendengruppen im Zuge der Herstellung eines Bauteils einer elektrischen Maschine einsetzbar.

Vorzugsweise weist die Fixier- und Spannvorrichtung drei übereinanderliegende Scheiben auf. Die unterste (oder alternativ oberste) Scheibe ist vorzugsweise eine nicht bewegliche Scheibe. In diese sind vorzugsweise die Einführungsfasen eingearbeitet. Mit dieser untersten Scheibe ist die Lagerung und die Betätigung der ersten und zweiten Spannscheibe (Beispiel für Elemente der Fangvorrichtung) verbunden. Es kann sich also um eine Art Grundplatte handeln, auf die alle weiteren Komponenten gelagert, z.B. geschraubt, werden können.

Beim Aufsetzen der Schweißlehre sind vorzugsweise die beiden Spannscheiben geöffnet und die Drahtenden, z.B. Enden von Hairpins, werden durch die Einführungsfasen axial "eingefangen" und an die späteren Positionen zum Verschweißen "sortiert", da eine gewisse Verschaltung des Elektromotors erfüllt sein sollte.

Ausführungsbeispiele werden im Folgenden anhand der beigefügten Zeichnungen näher erläutert. Darin zeigt:
- Fig. 1: eine perspektivische Teilansicht eines Maschinenelements einer elektrischen Maschine am Beispiel eines Stators eines Elektromotors im Zuge der Herstellung, hier insbesondere im Zuge der Herstellung von Spulenwicklungen, insbesondere aus Hairpins, wobei weiterzuverarbeitende Drahtenden von dem Maschinenelement vorstehen;
- Fig. 2: eine schematische Darstellung einer Herstellvorrichtung zum Durchführen wenigstens eines Herstellschritts zum Herstellen des Maschinenelements, wobei die Herstellvorrichtung eine Positionier- und Spannvorrichtung zum Positionieren und Spannen der Drahtenden aufweist;
- Fig. 3: eine Draufsicht auf einen Teilbereich eines ersten Elements einer zum Fangen und Positionieren von Drahtenden ausgebildeten Fangeinrichtung der Positionier- und Spannvorrichtung mit einer ersten Ausnehmung;
- Fig. 4: eine Draufsicht auf einen Teilbereich eines zweiten Elements der Fangeinrichtung mit einer zweiten Ausnehmung, welche mit einer Schrägführung versehen ist;
- Fig. 5: eine schematische Draufsicht auf einen Teilbereich einer ersten Ausführungsform der Fangeinrichtung, bei der die Elemente übereinander angeordnet sind und sich die Elemente tangential zu einer Achse des Maschinenelements relativ zueinander drehen;
- Fig. 6: eine schematische Draufsicht auf einen Teilbereich einer zweiten Ausführungsform der Fangeinrichtung, bei der sich die Elemente radial zu der Achse des Maschinenelements relativ bewegen;
- Fig. 7: eine perspektivische Ansicht der auf die vorstehenden Drahtenden aufgesetzten Fangeinrichtung im Betrieb der Positionier- und Spannvorrichtung;
- Fig. 8: eine Seitenansicht einer weiteren Ausführungsform der Positionier- und Spannvorrichtung;
- Fig. 9: eine perspektivische Ansicht der Positionier- und Spannvorrichtung von Fig. 8;
- Fig. 10: eine perspektivische Ansicht auf eine weitere Ausführungsform der Positionier- und Spannvorrichtung in einer Aufnahmestellung zum Aufnehmen von Drahtenden;
- Fig. 11: eine Draufsicht auf eine Anordnung von Ausnehmungen der Positionier- und Spannvorrichtung von Fig. 10 in der Aufnahmestellung;
- Fig. 12: eine perspektivische Ansicht eines Details von Fig. 11;
- Fig. 13: eine Draufsicht auf eine erste Ausnehmung der Positionier- und Spannvorrichtung von Fig. 10 bis 11;
- Fig. 14: eine Draufsicht auf die erste Ausnehmung, wobei eine Überlappung mit einer zweiten Ausnehmung der Positionier- und Spannvorrichtung in einer Spannstellung zum Spannen der Drahtenden angedeutet ist;
- Fig. 15: eine Ansicht wie in Fig. 10, wobei die Positionier- und Spannvorrichtung in der Spannstellung zum Spannen der Drahtenden dargestellt ist;
- Fig. 16: eine Ansicht wie in Fig. 11, wobei die Spannstellung dargestellt ist;
- Fig. 17: eine Ansicht wie in Fig. 12, wobei die Spannstellung dargestellt ist;
- Fig. 18: eine perspektivische Darstellung eines Maschinenelements, wie z.B. ein Stator einer elektrischen Maschine mit einer schematischen Darstellung von zu positionierenden und zu verspannenden Drahtenden vor dem Aufsetzen einer wie in Fig. 10 bis 13 dargestellten Positionier- und Spannvorrichtung;
- Fig. 19: das Maschinenelement von Fig. 18, wobei die erste und zweite Ausnehmung in der Spannstellung angedeutet ist;
- Fig. 20: das Maschinenelement der Fig. 18 und 19 mit der aufgesetzten Positionier- und Spannvorrichtung in der Spannstellung;
- Fig. 21: eine perspektivische und teilweise im Schnitt dargestellte Darstellung eines Teilbereichs einer weiteren Ausführungsform der Positionier- und Spannvorrichtung mit Einführfasen; und
- Fig. 22: eine Fig. 21 entsprechender Bereich einer Einführhilfeeinrichtung der Positionier- und Spannvorrichtung von Fig. 21 zusammen mit einer vergrößerten Detaildarstellung davon.

Im Folgenden werden anhand der beigefügten Figuren Ausführungsformen einer Positionier- und Spannvorrichtung 10 zum Positionieren und Spannen eines oder mehrerer Drahtenden 12a, 12b, 12c, 12d zwecks Weiterverarbeitung im Zuge einer Herstellung eines Maschinenelements 14 einer elektrischen Maschine am Beispiel der Herstellung eines Stators 16 eines Elektromotors erläutert.

Hierbei soll beispielsweise ein Stator 16 eines Elektromotors hergestellt werden, der als Fahrmotor für ein Fahrzeug, wie beispielsweise einen Elektro-Personenkraftwagen, dient und beispielsweise eine Leistung im Bereich von 10 kW bis 500 kW, vorzugsweise zwischen 20 kW und 200 KW, haben soll. Hierzu gilt es, eine möglichst kompakte und leistungsfähige Spulenwicklung 18 zu erzeugen.

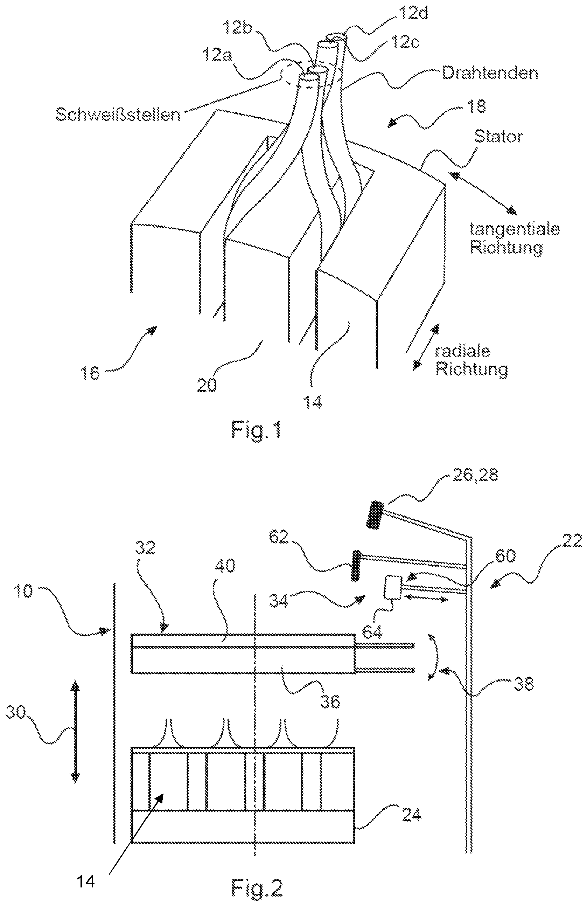

Hierzu wird gemäß dem in Fig. 1 dargestellten Herstellschritt die Spulenwicklung 18 aus mehreren bügelartigen Drahtstücken, sogenannten Hairpins, erzeugt, die an einem Ende eine nicht dargestellte U-Biegung aufweisen und mit ihren freien Drahtenden 12a, 12b, 12c, 12d in Nuten 20 des Stators 16 eingesteckt werden. Daraufhin werden die Drahtenden 12a, 12b, 12c, 12d zueinander gebogen und sollen in einem nächsten Weiterverarbeitungsschritt miteinander verbunden werden, um so durch Verbindung unmittelbar oder vorzugsweise mittelbar (z.B. über mehrere Nuten 20 hinweg) benachbarter Hairpins eine durchgehende Spulenwicklung 18 zu erzeugen. Für nähere Einzelheiten zu den hier nicht näher dargestellten Herstellschritten und dem weiteren Aufbau des Stators und der Hairpins wird auf die EP1 554 794 B1, EP 2 684 283 B1 und die EP 1 041 696 B1 verwiesen.

Die Drähte der Hairpins haben z.B. einen rechtwinkeligen Querschnitt mit einer Breite im Bereich von 2 mm bis 8 mm, z.B. 4,7 mm oder 6 mm, und eine Höhe zwischen 0,75 mm bis 4 mm, z.B. 2,36 mm oder 1,7 mm.

Die Anzahl der zu verbindenden Drahtpaare beträgt z.B. zwischen 12 und 164, wie z.B. 36, 58 oder 72 Drahtpaare. Es können eine oder mehrere nebeneinander angeordnete Reihen von Hairpins am Stator angeordnet werden.

Zum Verbinden werden die herausstehenden Drahtenden 12a, 12b, 12c, 12d zunächst vorgebogen und dann relativ zueinander positioniert und verspannt, um anschließend weiterverarbeitet, insbesondere geformt, geschnitten und insbesondere miteinander verbunden, insbesondere miteinander verschweißt zu werden. Zum Laserschweißen müssen hierzu die Drahtenden 12a, 12b, 12c, 12d sehr exakt positioniert werden; z.B. sind Toleranzen von max. 1/10 mm erlaubt.

Fig. 2 zeigt eine Herstellvorrichtung 22 zum Durchführen eines Herstellschritts, wie z.B. den Schritt der Herstellung der Spulenwicklung 18. Die Herstellvorrichtung 22 weist eine Halterung 24 für das Maschinenelement 14, die Positionier- und Spannvorrichtung 10 und eine Bearbeitungsvorrichtung 26, wie z.B. eine (Laser-)Schweißvorrichtung 28, auf.

Die Positionier- und Spannvorrichtung 10 ist an einem Maschinenbett oder dergleichen relativ beweglich zu der Halterung 24 derart gelagert, dass sie auf das Maschinenelement 14 aufsetzbar ist, was durch den Pfeil 30 angedeutet ist.

Die Positionier- und Spannvorrichtung 10 weist eine Fangeinrichtung 32, die bei einigen Ausführungsformen auch als Fixier- und Spanneinrichtung 34 dient, auf. Bei einer anderen Ausführungsform weist die Positionier- und Spannvorrichtung 10 eine Fangeinrichtung 32 und eine optionale separate Fixier- und Spanneinrichtung 34 auf.

Die Fangeinrichtung 32 ist zum Fangen der Drahtenden 12a, 12b, 12c, 12d und zum Positionieren derselben vorgesehen. Insbesondere erfolgt hier zumindest eine Vorpositionierung der Drahtenden.

Die Fixier- und Spanneinrichtung 34 dient zum Fixieren und Spannen der durch die Fangeinrichtung zumindest vorpositionierten Drahtenden 12a, 12b, 12c, 12d.

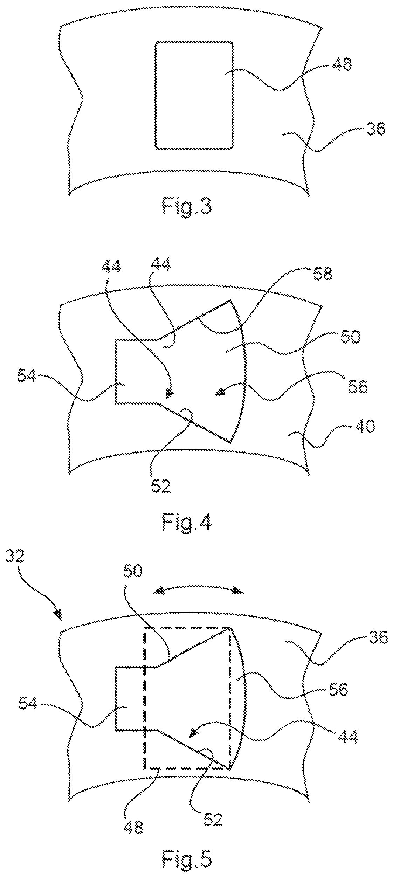

Eine separate Fixier- und Spanneinrichtung 34 ist optional vorgesehen und kann bei anderen Ausgestaltungen weggelassen sein; in diesem Fall werden die Aufgaben des Fixierens und Spannens ebenfalls durch die Fangeinrichtung 32 übernommen. Versuche haben ergeben, dass sich das Fixieren und Spannen auch hochgenau gut allein mit der Fangeinrichtung 32 der im Folgenden anhand der Figuren 2 bis 5 und 7 sowie 10 bis 20 erläuterten Ausgestaltungen durchführen lässt.

Im Folgenden wird ein Ausführungsbeispiel der Fangeinrichtung 32 anhand der Darstellungen der Fig. 2 bis 5 und Fig. 7 sowie 10 bis 22 näher erläutert.

Die Fangeinrichtung 32 weist vorzugsweise ein erstes Element 36 und ein zweites Element 40 sowie eine Antriebseinrichtung 38 zur Relativbewegung des ersten 36 und des zweiten Elements 40 auf.

Die Fangeinrichtung 32 weist wenigstens eine Schrägführung, hier zum Beispiel eine erste Schrägführung 44, auf. Bei einer Ausgestaltung lässt sich mittels der Schrägführung - z.B. erste Schrägführung 44 - wenigstens ein Drahtende 12a, 12b, 12c, 12d bei Relativbewegung der Elemente 36, 40 der Fangeinrichtung 32 sowohl in einer Richtung tangential zu einer Mittelachse 46 durch die Fangeinrichtung 32 (die insbesondere konzentrisch zu einer Mittelachse des Maschinenelements 14 auszurichten ist) als auch radial zu der Mittelachse 46 positionieren.

Die Elemente 36, 40 der Fangeinrichtung 32 sind bei dem in den Fig. 2 bis 5 und 10 bis 22 dargestellten Ausführungsbeispiel als Scheiben, insbesondere Ringscheiben ausgebildet.

Das erste Element 36 weist mehrere erste Aussparungen oder Ausnehmungen 48 auf, und das zweite Element 40 weist mehrere zweite Aussparungen oder Ausnehmungen 50 auf. Bei den dargestellten Ausführungsbeispielen ist die erste Schrägführung 44 durch wenigstens eine zumindest teilweise schräge Berandung 52 der jeweiligen zweiten Ausnehmungen 50 ausgebildet.

Bei dem Ausführungsbeispiel der Fig. 2 bis 5 und 7 weist die erste Ausnehmung 48 eine rechteckige Kontur auf, und die zweite Ausnehmung 50 weist einen engeren Bereich 54 und einen weiteren Bereich 56 auf, wobei die diese Bereiche 54, 56 verbindenden Berandungen 52 konisch zueinander schräg verlaufen, so dass eine trichterförmige Einführschräge 58 gebildet ist.

Die Ausrichtung der schrägen Berandung ist derart, dass sie mit einer ihrer Richtungskomponenten in Relativbewegungsrichtung der Elemente 36, 40 der Fangeinrichtung 32 gerichtet ist, wobei der engere Bereich 54 an einem in Bewegungsrichtung weisenden Rand der zweiten Ausnehmung 50 ausgebildet ist.

Fig. 2 bis 5 und Fig. 7 und 10 bis 22 zeigen die Ausbildung der beiden Elemente 36, 40 als Scheiben, die um die Mittelachse 46 relativ zueinander drehbar sind, so dass die erste und die zweite Ausnehmung 48, 50 tangential zur Mittelachse relativ zueinander bewegbar sind.

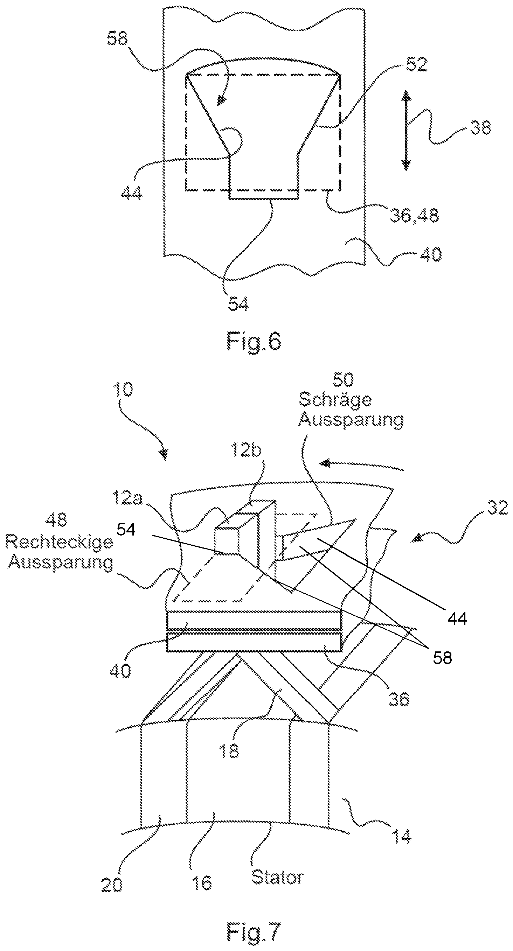

Fig. 6 zeigt eine Abwandlung, bei der die beiden Ausnehmungen 48, 50 nicht tangential, sondern radial zur Mittelachse relativ zueinander bewegbar sind. Dies kann z.B. dadurch realisiert werden, dass wenigstens eines der beiden Elemente durch eine Reihe von Segmenten gebildet ist, die durch die Antriebseinrichtung 38 radial bewegbar sind.

Fig. 7 zeigt den Betrieb der Fangeinrichtung 32. Hierzu werden die erste und die zweite Ausnehmung 48, 50 durch eine entsprechende Relativstellung des ersten und des zweiten Elements 36, 40 derart zueinander ausgerichtet, dass ein Durchgang mit möglichst großer Öffnungsweite gebildet wird, und dann wird die Fangeinrichtung 32 in Richtung auf das Maschinenelement 14 zu bewegt, um die Drahtenden 12a, 12b, 12c, 12d in dem Durchgang einzufangen. Anschließend werden das erste und das zweite Element 36, 40 relativ zueinander bewegt, wobei sich der Durchgang durch die erste Schrägführung 44 bzw. die diese bildende Einführschräge 58 verkleinert. Die Drahtenden 12a, 12b werden durch die Berandung der ersten Ausnehmung 48 entlang der Schrägführung 44 tangential und radial ausgerichtet und in den engeren Bereich 54 eingeführt, wo sie zumindest vorpositioniert werden.

Fig. 2 zeigt ein Ausführungsbeispiel mit einer lediglich optional vorgesehenen separaten Fixier- und Spanneinrichtung 34, mittels der nach einer durch die Fangeinrichtung 32 erfolgten Vorpositionierung durch ein Fixier- und Spannelement 60 eine Auferlegung einer Spannkraft zwischen dem Fixier- und Spannelement 60 und einem Gegenhalter 62 erfolgt, um so die Drahtenden 12a, 12b noch exakter zu positionieren und zu spannen.

Dies kann in Situationen vorteilhaft sein, wo sich Drahtenden 12a, 12b durch den Angriff der Schrägführung z.B. verdrillt haben und somit nicht ganz exakt oder zumindest nicht mit einer vom Konstruktionsaufwand her vertretbaren Relativkraft zwischen dem ersten und dem zweiten Element 36, 40 positionieren lassen.

Das Fixier- und Spannelement 60 kann z.B. einen Stempel 64 umfassen.

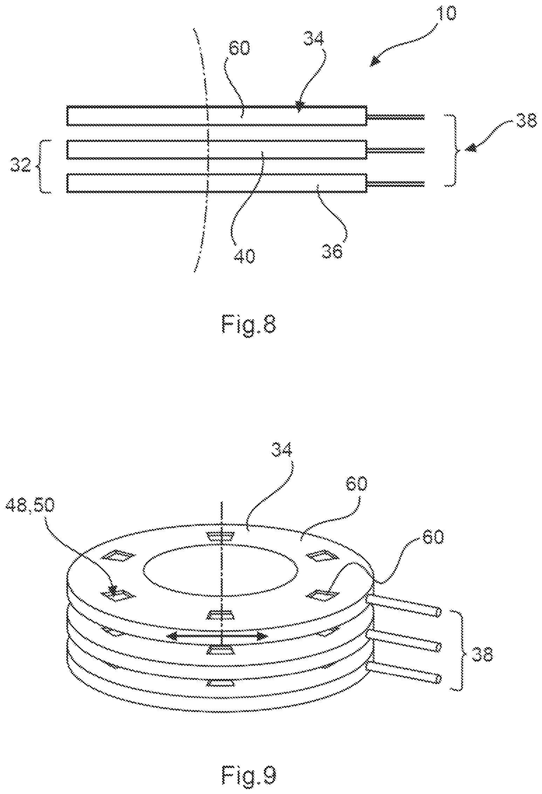

Bei einer in den Fig. 8 und 9 gezeigten Abwandlung ist das Fixier- und Spannelement 60 an einer weiteren Scheibe ausgebildet, die sich konzentrisch zu den als Scheiben ausgebildeten Elementen 36, 40 der Fangeinrichtung drehen lässt. Hierzu kann ebenfalls die Antriebseinrichtung 38 vorgesehen sein, die über Mitnehmer die drei Elemente zu unterschiedlichen Winkelstellungen unterschiedlich zueinander bewegen kann, wobei vorzugsweise die größte Kraft über das Fixier- und Spannelement 60 einleitbar ist.

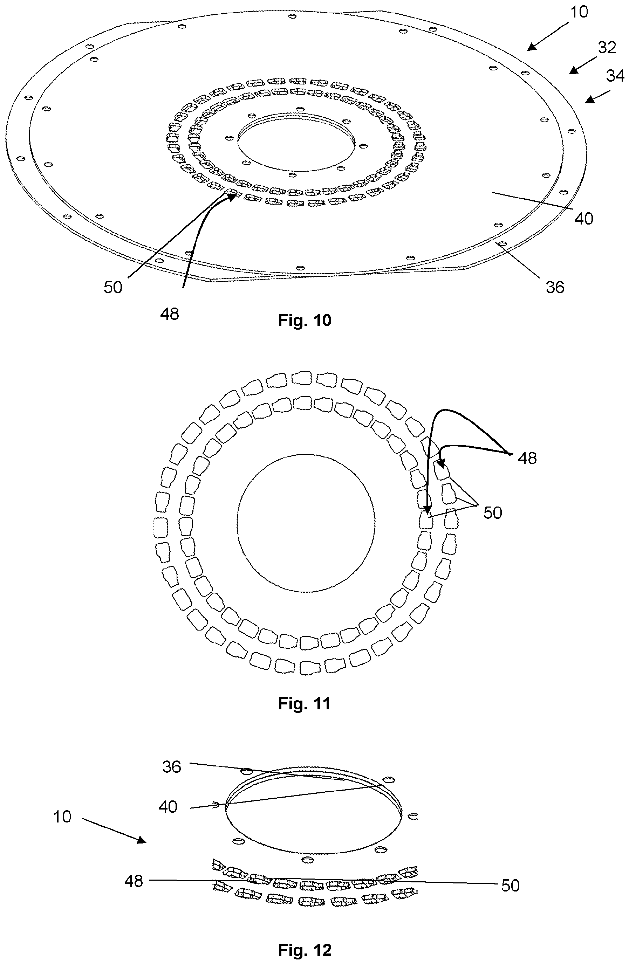

Bei dem in den Fig. 10 bis 17 dargestellten Ausführungsbeispiel der Fangeinrichtung 32 weisen sowohl die zweite Ausnehmung 50 als auch die erste Ausnehmung 48 jeweils eine Schrägführung 44, 66 auf. Vorzugsweise sind sowohl die an der ersten Ausnehmung 48 ausgebildete erste Schrägführung 58 als auch die an der zweiten Ausnehmung 50 ausgebildete zweite Schrägführung 66 als trichterförmige Einführschräge 58 ausgebildet. Hierzu ist die erste Ausnehmung 48 nicht, wie zuvor bei dem anderen Ausführungsbeispiel beschrieben, rechteckig, sondern ebenfalls mit einem engeren Bereich 54 und einem weiteren Bereich 56 sowie einer zumindest teilweise schrägen Berandung 52 ausgestaltet. Dabei sind die Neigungswinkel an der ersten und zweiten Schrägführung 44, 66 vorzugsweise entgegengesetzt ausgebildet. Dies kann besonders bevorzugt derart realisiert werden, dass die erste Ausnehmung 48 und die zweite Ausnehmung 50 spiegelbildlich zueinander ausgebildet sind.

Vorzugsweise erstreckt sich der engere Bereich 54 über eine kleinere Strecke in Umfangsrichtung (=tangentiale Richtung) als der weitere Bereich 56.

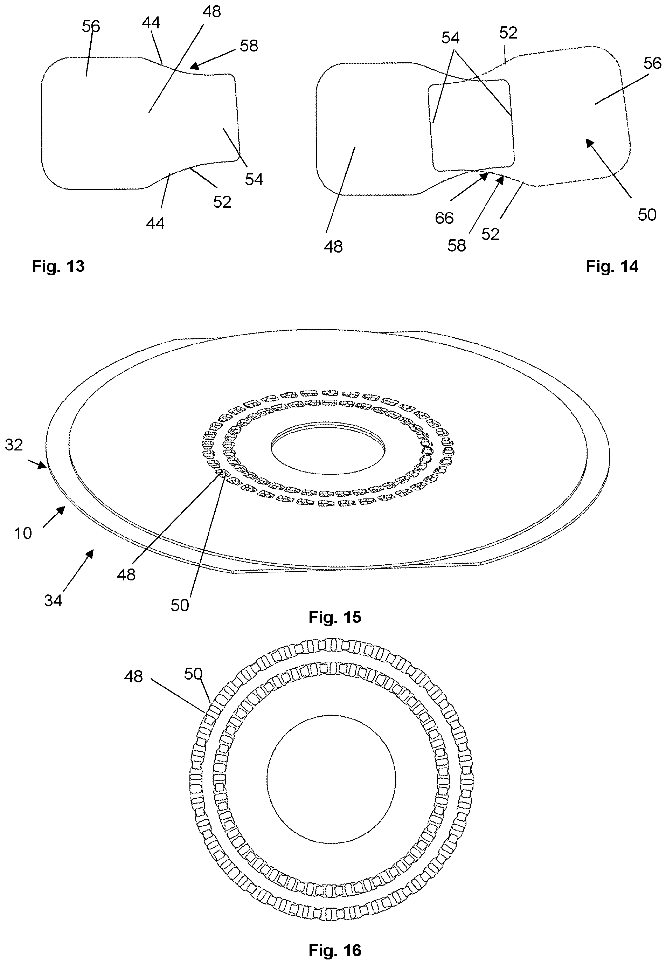

Wie insbesondere in den Figuren 10 und 15 zu sehen, weisen das erste und das zweite Element 36, 40 vorzugsweise wenigstens eine Ringanordnung der Ausnehmungen 48, 50, und mehr vorzugsweise mehrere konzentrische Ringanordnungen, derart auf, dass sich jeweils eine erste Ausnehmung 48 und eine zweite Ausnehmung 50 auf der gleichen radialen und tangentialen Position befinden und so miteinander überlappen können. Die Anzahl der konzentrischen Ringanordnungen richtet sich nach der Anzahl der pro Nut 20 vorgesehenen zu verspannenden Drahtenden. Die in den Fig. 10 bis 17 dargestellte Ausführung weist eine erste und eine zweite Ringanordnung auf. Diese ist beispielsweise für einen Stator 16 geeignet, bei dem pro Nut 20 vier Drahtsegmente mit vorstehenden Drahtenden 12a-12d vorgesehen sind. Die Anzahl der Ausnehmungen pro Ringanordnung kann z.B. der Anzahl der Nuten entsprechen.

Die Figuren 10 bis 12 zeigen die Fangeinrichtung 32 und damit die Positionier- und Spannvorrichtung 10 in einer Aufnahmeposition, wo sich die erste und die zweite Ausnehmung 48, 50 möglichst weit mit ihren weiteren Bereichen 56 überlappen und so eine große Aufnahmeöffnung zum Aufnehmen der zu positionierenden Drahtenden 12a-12d bilden. Durch Relativdrehung des ersten und des zweiten Elements 36, 40 gelangen die Elemente 36, 40 in eine Spannstellung, wo sich nur noch die engeren Bereiche 54 der ersten und zweiten Ausnehmung 48, 50 überlappen, wie dies in den Fig. 14 bis 17 dargestellt ist.

Wie insbesondere aus den Fig. 13 und 14 ersichtlich, müssen die Schrägführungen 44, 66 nicht geradlinig verlaufen, vielmehr sind Berandungen 52, deren zumindest teilweise schräger Verlauf eine Krümmung aufweist, bevorzugt. Auch ist bevorzugt, dass Übergänge abgerundet sind, um eine Führung ohne Verkantung oder Verhakung zu ermöglichen.

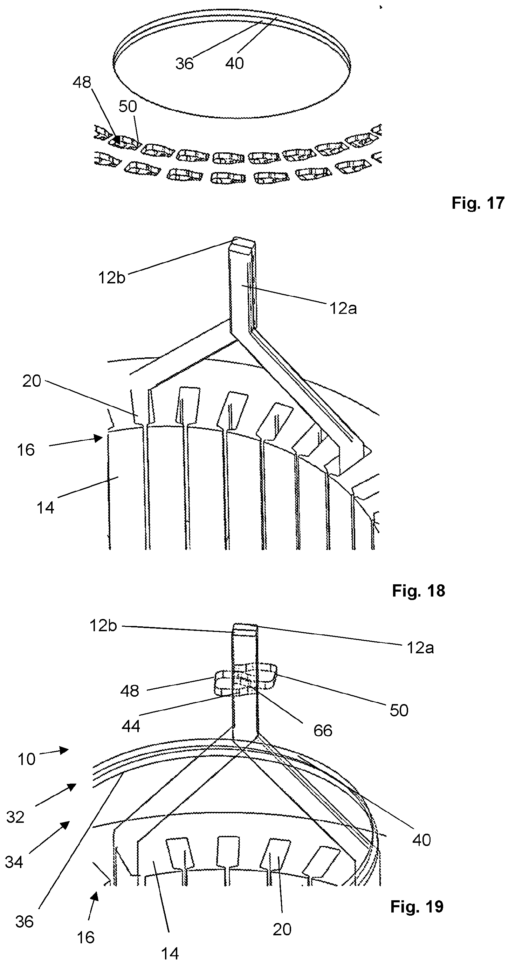

In den Fig. 18 bis 20 ist ein Beispiel für das Positionieren und Spannen mit einer Positionier- und Spannvorrichtung 10 gemäß den Fig. 10 bis 17 skizziert, wobei zu Darstellungszwecken nur ein Drahtendenpaar mit der zugeordneten ersten und zweiten Ausnehmung 48, 50 gezeigt ist. Die Positionier- und Spannvorrichtung 10 wird in der Aufnahmestellung auf das in Fig. 18 dargestellte Maschinenelement 14 relativ in axialer Richtung zu bewegt, so dass die Drahtenden 12a, 12b in die große Aufnahmeöffnung eingefügt werden.

Danach erfolgt eine Relativbewegung der Elemente 36, 40 aus der Aufnahmestellung in eine Spannstellung. Wenn sich die beispielsweise als Spannscheiben ausgebildeten Elemente 36, 40 im Zuge dieser Bewegung in einer Zwischenstellung befinden (halb geschlossen), erfolgt eine radiale Ausrichtung der Drahtenden über die Schrägführungen 44, 66, so dass in dieser Stellung die Drahtenden bereits radial positioniert sind, in Umfangsrichtung (tangentialer Richtung) aber noch Abweichungen aufweisen können.

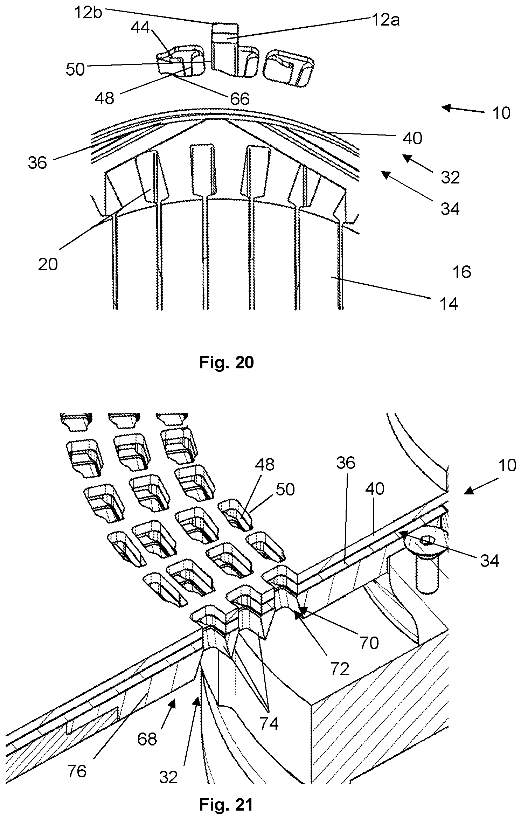

In Fig. 19 und 20 sind das erste und das zweite Element 36, 40 in der Spannstellung (z.B. Spannscheiben geschlossen). Hier werden die Drahtenden 12a, 12b zwischen den sich in radialer Richtung erstreckenden engeren Berandungen der ersten und zweiten Ausnehmung 48, 50 verspannt, so dass sie auch in tangentialer Richtung korrekt positioniert sind.

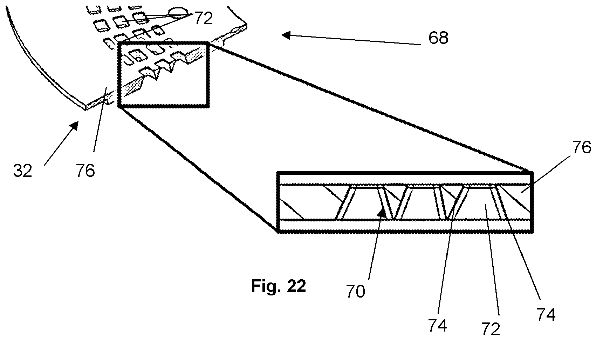

Die Figuren 21 und 22 zeigen eine weitere Ausführungsform der Positionier- und Spannvorrichtung 10, bei der eine Einführhilfeeinrichtung 68 zum Erleichtern eines Einführens der Drahtenden 12a-12d in axialer Richtung in die erste und zweite Ausnehmung 48, 50 vorgesehen ist. Die Einführhilfeeinrichtung 68 kann mit irgendeiner Ausgestaltung von Fangeinrichtung 32 kombiniert sein. In dem dargestellten Beispiel ist die Einführhilfeeinrichtung 68 mit der Fangeinrichtung 32 gemäß der Ausführung der Fig. 10 bis 20 kombiniert.

Die Einführhilfeeinrichtung 68 weist ebenfalls eine Schrägführung, z.B. eine dritte Schrägführung 70, auf, die ebenfalls als trichterförmige Einführschräge ausgebildet sein kann. Diese Schrägführung 70 ist in eine axiale Richtung und in eine Umfangsrichtung oder in eine radiale Richtung geneigt.

Zum Beispiel ist die Einführhilfeeinrichtung 68 mit einer dritten Ausnehmung 72 versehen, die in einer Aufnahmestellung der Positionier- und Spannvorrichtung 10 mit der ersten und zweiten Ausnehmung 48, 50 fluchten. Zumindest eine Berandung der dritten Ausnehmung ist gefast und bildet somit eine Einführfase 74. Vorzugsweise sind gegenüberliegende Berandungen der dritten Ausnehmung 72 je mit einer Einführfase entgegengesetzter Neigung versehen, so dass eine trichterförmige Einführhilfe geschaffen ist.

Sind mehrere erste und zweite Ausnehmungen 48, 50 vorgesehen, so ist bevorzugt eine entsprechende Anordnung von dritten Ausnehmungen 72 vorgesehen.

Bei einem Ausführungsbeispiel sind die Einführfasen 74 an einer stationären Platte ausgebildet, die beispielsweise als Grundplatte 76 dient, auf der die scheibenförmigen Elemente 46, 40 drehbar gelagert sind.

Beim oben erwähnten Aufsetzen der Positionier- und Spannvorrichtung 10 werden das Maschinenteil 14 und die Positionier- und Spannvorrichtung 10 axial relativ zueinander bewegt. Dabei befinden sich das erste und das zweite Element in der Aufnahmestellung mit sich mit ihren weiteren Bereichen überlappenden Ausnehmungen 48, 50 derart, dass diese weiteren Bereiche auch mit der dritten Ausnehmung 72 überlappen. Die Drahtenden werden durch die Einführfasen 74 in der ersten und zweiten Ausnehmung vorpositioniert bzw die Einführfasen 74 sorgen dafür, dass die Drahtenden überhaupt in die erste und die zweite Ausnehmung hinein gelangen können. Dann erfolgt der oben bereits beschriebene Vorgang der gegensinnigen Verdrehung des ersten und zweiten Elements 36, 40, so dass die Drahtenden zunächst in radialer Richtung positioniert werden und dann in Umfangsrichtung positioniert und anschließend gespannt werden.

Somit kann man die Einführhilfeeinrichtung 68 auch als weiteres Ausführungsbeispiel der Fangeinrichtung 32 ansehen, während die beiden Elemente 36, 40 zusammen die Fixier- und Spanneinrichtung 34 bilden.

Die Antriebseinrichtung 38 kann bei allen Ausführungen federmechanisch, elektrisch, pneumatisch oder hydraulisch ausgebildet sein. Vorzugsweise weist sie einen Kraftspeicher wie z.B. eine Feder auf, die arretierbar ist und plötzlich freigebbar ist, so dass die Antriebseinrichtung einen starken Relativbewegungsimpuls auf die Elemente 36, 40 und gegebenenfalls 60 ausübt. Die durch die Antriebseinheit zu erzeugenden Drehmomentkräfte zum Verspannen einer Gruppe von Drahtenden können im Bereich von 400 Nm bis 3000 Nm liegen, z.B. bei 1800 Nm.

Die hinsichtlich der einzelnen Ausführungsbeispiele beschriebenen Merkmale können entsprechend den Ansprüchen 1 bis 15 beliebig miteinander kombiniert und in anderen Ausführungen auch weggelassen werden.

### Bezugszeichenliste:

- 10: Positionier- und Spannvorrichtung
- 12a-12d: Drahtende
- 14: Maschinenelement
- 16: Stator
- 18: Spulenwicklung
- 20: Nut
- 22: Herstellvorrichtung
- 24: Halterung
- 26: Bearbeitungsvorrichtung
- 28: Schweißvorrichtung
- 30: Relativ-Auf- und Ab-Bewegung Maschinenelement - Positionier- und Spannvorrichtung
- 32: Fangeinrichtung
- 34: Fixier- und Spanneinrichtung
- 36: erstes Element
- 38: Antriebseinrichtung
- 40: zweites Element
- 44: erste Schrägführung
- 48: erste Ausnehmung
- 50: zweite Ausnehmung
- 52: zumindest teilweise schräge Berandung
- 54: engerer Bereich
- 56: weiterer Bereich
- 58: Einführschräge
- 60: Fixier- und Spannelement
- 62: Gegenhalter
- 64: Stempel
- 66: zweite Schrägführung
- 68: Einführhilfeeinrichtung
- 70: dritte Schrägführung
- 72: dritte Ausnehmung
- 74: Einführfase
- 76: Grundplatte

## Patentansprüche

1. Positionier- und Spannvorrichtung (10) zum Positionieren und Spannen wenigstens eines Drahtendes (12a-12d), das von einem Maschinenelement (14) vorsteht, zu dem die Positionier- und Spannvorrichtung (10) in Richtung einer Drahtendenerstreckung relativ beweglich ist, zwecks Weiterverarbeitung im Zuge einer Herstellung des Maschinenelements (14) einer elektrischen Maschine, umfassend:
eine Fangeinrichtung (32) zum Fangen, Positionieren, Spannen und Fixieren des wenigstens einen Drahtendes (12a-12d) oder zumindest zum Fangen und
Vorpositionieren des wenigstens einen Drahtendes (12a-12d) zwecks Fixieren und
Spannen des so vorpositionierten wenigstens einen Drahtendes (12a-12d) durch eine Fixier- und Spanneinrichtung (34), wobei die Fangeinrichtung (32) ein erstes Element (36) mit einer ersten Ausnehmung (48) und ein zweites Element (40) mit einer zweiten Ausnehmung (50) aufweist, **dadurch gekennzeichnet,**
**dass** die Fangeinrichtung (32) wenigstens eine Schrägführung (44, 66, 70) zum Positionieren des wenigstens einen Drahtendes (12a-12d) oder zum relativen Positionieren von mehreren Drahtenden (12a-12d) zueinander aufweist, wobei die Elemente (36, 40) in einer Umfangsrichtung oder einer Radialrichtung der Positionier- und Spannvorrichtung (10) relativ zueinander bewegbar sind, wobei die erste und die zweite Ausnehmung (48, 50) sich zumindest teilweise derart überlagern, dass das wenigstens eine Drahtende (12a, 12b) innerhalb der ersten und der zweiten Ausnehmung (48, 50) aufnehmbar ist und Berandungen (52) der ersten und der zweiten Ausnehmung (48, 50) sich im Zuge der Relativbewegung in Umfangsrichtung oder Radialrichtung zueinander annähern oder entfernen,
wobei wenigstens eine Berandung (52) an wenigstens einer der ersten und
zweiten Ausnehmung (48, 50) sich zumindest teilweise zwischen einem engeren (54) Bereich und einem breiteren (56) Bereich der wenigstens einen Ausnehmung (48, 50) schräg erstreckt, um die wenigstens eine Schrägführung (44, 66, 70) zu bilden.

2. Positionier- und Spannvorrichtung (10) nach Anspruch 1,
**dadurch gekennzeichnet**,
2.1 dass die wenigstens eine Schrägführung (44, 66) bei Relativbewegung in Umfangsrichtung der Positionier- und Spannvorrichtung (10) ein Führen des wenigstens einen Drahtendes (12a-12d) in eine Radialrichtung bewirkt, und/oder
2.2 dass eine erste Schrägführung (44), die sich in eine Umfangsrichtung der Positionier- und Spannvorrichtung (10) und in eine Radialrichtung erstreckt, und eine weitere Schrägführung (70), die sich in eine axiale Richtung und in eine Radialrichtung erstreckt, vorgesehen sind.

3. Positionier- und Spannvorrichtung (10) nach einem der voranstehenden Ansprüche,
**dadurch gekennzeichnet**,
3.1 dass gegenüberliegende Berandungen (52) einer oder wenigstens einer der Ausnehmungen (48, 50) einen trichterförmigen Einführschrägbereich (58) bilden und/oder
3.2 dass sich wenigstens eine erste Berandung (52) der ersten Ausnehmung (48) zumindest teilweise schräg erstreckt und sich wenigstens eine mit der ersten Berandung überlagernde erste Berandung (52) der zweiten Ausnehmung (50) zumindest teilweise schräg erstreckt, wobei die Neigungsrichtungen der sich schräg erstreckenden Bereiche der ersten Berandung (52) der ersten und zweiten Ausnehmung (48, 50) entgegengesetzt sind und/oder
3.3 dass gegenüberliegende Berandungen (52) der ersten Ausnehmung (48) einen ersten trichterförmigen Einführschrägbereich (58, 70) bilden und gegenüberliegende Berandungen (52) der zweiten Ausnehmung (50) einen zweiten trichterförmigen Einführschrägbereich (58, 44) bilden, wobei die Einführschrägbereiche (58) entgegengesetzt zueinander angeordnet sind, und/oder
3.4 dass die wenigstens eine sich zumindest teilweise schräg erstreckende Berandung (52) eine sich in Umfangsrichtung erstreckende Berandung (52) ist.

4. Positionier- und Spannvorrichtung (10) nach einem der voranstehenden Ansprüche,
**dadurch gekennzeichnet**,
4.1 dass das erste und/oder das zweite Element (36, 40) als Scheibe oder Ringscheibe oder als Scheibensegment oder Ringscheibensegment ausgebildet sind und/oder
4.2 dass das erste und das zweite Element (36, 40) um eine gemeinsame Drehachse relativ zueinander verdrehbar sind und/oder
4.3 dass eine Mehrzahl erster und zweiter Ausnehmungen (48, 50) um eine Achse herum verteilt angeordnet sind, wobei mehrere erster und/oder zweiter Elemente (36, 40) vorgesehen sind, die relativ zueinander radial zu der Achse beweglich sind.

5. Positionier- und Spannvorrichtung (10) nach einem der voranstehenden Ansprüche, **dadurch gekennzeichnet,**
**dass** die Fangeinrichtung (32) als Einzeleinrichtung zur Handhabung eines Drahtendes (12a- 12d) oder eines Drahtendenpaares (12a- 12d) oder als Mehrfacheinrichtung zur gleichzeitigen Handhabung einer Mehrzahl von Drahtenden (12a- 12d) oder einer Mehrzahl von Drahtendpaaren (12a- 12d) ausgebildet ist.

6. Positionier- und Spannvorrichtung (10) nach einem der voranstehenden Ansprüche, **dadurch gekennzeichnet**,
6.1 dass die Fangeinrichtung (32) zum Fixieren und Spannen des wenigstens einen Drahtendes (12a-12d) ausgebildet ist, und/oder
6.2 dass zusätzlich zu der Fangeinrichtung (32) weiter eine Fixier- und Spanneinrichtung (34) zum Fixieren und Spannen des mittels der Fangeinrichtung (32) vorpositionierten wenigstens einen Drahtendes (12a-12d) vorgesehen ist und/oder
6.3 dass eine Einführhilfeeinrichtung (68) zum axialen Einführen von Drahtenden (12a- 12d) in Ausnehmungen (48, 50) der Positionier- und Spannvorrichtung (10), mit wenigstens einer sich in axialer Richtung erstreckenden Einführhilfe und/oder einer sich in axialer Richtung erstreckenden Einführschräge (70) und/oder einem sich in axialer Richtung erstreckenden Einführtrichter vorgesehen ist.

7. Positionier- und Spannvorrichtung (10) nach Anspruch 6, **dadurch gekennzeichnet**,
7.1 dass die Fixier- und Spanneinrichtung (34) ein relativ zu der Fangeinrichtung (32) bewegbares Fixier- und Spannelement (60) zum Fixieren und Spannen des wenigstens einen Drahtendes (12a- 12d) zwischen der Fangeinrichtung (32) und dem Fixier- und Spannelement (60) aufweist und/oder
7.2 dass die Fixier- und Spanneinrichtung (34) ein Fixier- und Spannelement (60, 36) und einen Gegenhalter (62, 40) aufweist, die relativ zueinander zum Fixieren und Spannen des wenigstens eine Drahtendes (12a-12d) dazwischen bewegbar sind, und/oder
7.3 dass die Fixier- und Spanneinrichtung (34) als Fixier- und Spannelement einen bewegbar angetriebenen Stempel (64) aufweist und/oder
7.4 dass die Fixier- und Spanneinrichtung (34) als Einzeleinrichtung zur Handhabung eines Drahtendes (12a- 12d) oder eines Drahtendenpaares (12a-12d) oder als Mehrfacheinrichtung zur gleichzeitigen Handhabung einer Mehrzahl von Drahtenden (12a-12d) oder einer Mehrzahl von Drahtendpaaren (12a- 12d) ausgebildet ist und/oder
7.5 dass die Fangeinrichtung (32) und die Fixier- und Spanneinrichtung (34) mit einem gemeinsamen Antrieb (38) oder gekoppelten Antrieben zum Durchführen des Fangens, Vorpositionierens, Fixierens und Spannens im Zuge einer Bewegung versehen sind oder dass die Fangeinrichtung (32) und die Fixier- und Spanneinrichtung (34) unabhängig voneinander bewegbar sind und/oder
7.6 dass die Einführhilfeeinrichtung (68) stationär ausgebildet ist und die Fangeinrichtung (32) und/oder die Fixier- und Spanneinrichtung (34) wenigstens ein zu der Einführhilfeeinrichtung (68) bewegbares oder drehbares Element (36, 40) aufweist und/oder
7.7 dass die Einführhilfeeinrichtung (68) als Einzeleinrichtung zur Handhabung eines Drahtendes (12a- 12d) oder eines Drahtendenpaares (12a- 12d) oder als Mehrfacheinrichtung zur gleichzeitigen Handhabung einer Mehrzahl von Drahtenden (12a-12d) oder einer Mehrzahl von Drahtendpaaren (12a- 12d) ausgebildet ist.

8. Herstellvorrichtung zum Herstellen eines Maschinenelements (14) einer elektrischen Maschine, umfassend eine Positionier- und Spannvorrichtung (10) nach einem der voranstehenden Ansprüche und eine Bearbeitungseinrichtung (26), insbesondere Schweißeinrichtung (28), Schneideinrichtung und/oder Formeinrichtung zum Verarbeiten des wenigstens einen gespannten Drahtendes (12a-12d).

9. Mittels einer Positionier- und Spannvorrichtung (10) nach einem der Ansprüche 1 bis 7 durchführbares Positionier- und Spannverfahren zum Positionieren und Spannen wenigstens eines Drahtendes (12a-12d) für eine Weiterverarbeitung im Zuge einer Herstellung eines Maschinenelements (14) einer elektrischen Maschine, **gekennzeichnet durch** die Schritte
a) Fangen und Positionieren des wenigstens einen Drahtendes (12a-12d) mittels wenigstens einer Schrägführung (44, 66, 70) zum Führen des wenigstens einen Drahtes (12a-12d), über welche das wenigstens eine Drahtende (12a-12d) in eine exakte Lage gebracht wird, und
b) Fixieren und Spannen des wenigstens einen Drahtendes (12a-12d).

10. Positionier- und Spannverfahren nach Anspruch 9,
**dadurch gekennzeichnet,**
**dass** Schritt a) wenigstens einen, mehrere oder alle der Schritte umfasst:
a1) Fangen des wenigstens einen Drahtendes (12a-12d), Annähern der Drahtenden (12a- 12d) zueinander in einer Vorposition und Halten des wenigstens einen Drahtendes (12a- 12d) in der Vorposition;
a2) Relativbewegen eines ersten Elements (36) mit wenigstens einer ersten Ausnehmung (48) und eines zweiten Elements (40) mit wenigstens einer zweiten Ausnehmung (50),
a3) Fangen und Positionieren zwischen sich zueinander bewegenden Berandungen (52) der ersten und der zweiten Ausnehmung (48, 50), wobei wenigstens eine der sich relativ bewegenden Berandungen (52) zumindest teilweise schräg verläuft;
a4) Fangen und Positionieren mittels einer Einführschräge (58); und/oder
a5) Fangen und Positionieren zwischen sich trichterförmig gegenüberliegenden schrägen Berandungen (52) und/oder
a6) Fangen und Positionieren mittels sich gegenläufig erstreckender und gegenläufig relativ zueinander bewegbaren Einführschrägen (58, 44; 58, 66) oder Einführtrichtern.

11. Positionier- und Spannverfahren nach einem der Ansprüche 9 oder 10, **dadurch gekennzeichnet,**
**dass** einzelne Drahtenden (12a- 12d) oder Drahtendenpaare (12a- 12d) einzeln positioniert und gespannt werden oder
**dass** eine Gruppe mehrerer einzelner Drahtenden (12a- 12d) oder mehrerer Drahtendenpaare (12a- 12d) gemeinsam positioniert oder gespannt werden.

12. Positionier- und Spannverfahren nach einem der Ansprüche 9 bis 11, **dadurch gekennzeichnet,**
**dass** Schritt a) zum Fangen und Vorpositionieren des wenigstens einen Drahtendes (12a-12d) durchgeführt wird und weiter der Schritt b) Fixieren und Spannen des wenigstens einen vorpositionierten Drahtendes (12a-12d) umfasst.

13. Positionier- und Spannverfahren nach einem der Ansprüche 9 bis 12, **dadurch gekennzeichnet**, 13.1 dass Schritt b) umfasst:
b1) Verbringen des in Schritt a) vorpositionierten wenigstens einen Drahtendes (12a-12d) in seine für die Weiterverarbeitung erwünschte Lage und/oder
b2a) Aufbringen einer Spannkraft auf das wenigstens eine Drahtende (12a-12d) zwischen einem ersten und einem zweiten Element (36, 40) einer Fangeinrichtung (32), wobei die Elemente (36, 40) zueinander relativ beweglich oder zueinander drehbar sind und wobei an wenigstens einem der Elemente (36, 40) der Fangeinrichtung (32) die wenigstens eine Schrägführung (44, 66, 70) vorgesehen ist oder
b2b) Aufbringen einer Spannkraft auf das wenigstens eine Drahtende (12a- 12d) zwischen einer zum Durchführen von Schritt a) ausgebildeten Fangeinrichtung (32) und einem hierzu beweglichen Fixier- und Spannelement (60, 36, 40) oder
b2c) Aufbringen einer Spannkraft auf das wenigstens eine Drahtende (12a-12d) zwischen einem gesondert zu einer Fangeinrichtung (32) zum Durchführen von Schritt a) vorgesehenen Fixier- und Spannelement (60, 36) und einem gesondert vorgesehenen Gegenhalter (62, 40) und/oder
13.2 dass die Schritte a) und b) in einer gemeinsamen Bewegung oder in getrennten Bewegungen durchgeführt werden.

14. Verfahren zum Verbinden von Drahtenden im Zuge der Herstellung einer elektrischen Maschine, umfassend Durchführen eines Positionier- und Spannverfahrens nach einem der Ansprüche 9 bis 13 und Verbinden der verspannten Drahtenden (12a-12d), insbesondere mittels Schweißen.

15. Verfahren nach Anspruch 14, **dadurch gekennzeichnet,**
**dass** die Drahtenden (12a-12d) von Hairpins im Zuge der Herstellung eines Stators (16) einer elektrischen Maschine verbunden werden.

## Claims

1. A positioning and tensioning device (10) for positioning and tensioning at least one wire end (12a-12d) projecting from a machine element (14) to which the positioning and tensioning device (10) is relatively movable in a direction of a wire end extension for further processing in the course of manufacturing the machine element (14) of an electrical machine, comprising:
a catching device (32) for catching, positioning, tensioning and fixing the at least one wire end (12a-12d) or at least for catching and pre-positioning the at least one wire end (12a-12d) for the purpose of fixing and tensioning the thus pre-positioned at least one wire end (12a-12d) by a fixing and tensioning device (34), wherein the catching device (32) comprises a first element (36) having a first recess (48) and a second element (40) having a second recess (50),
**characterized in that**
the catching device (32) comprises at least one inclined guide (44, 66, 70) for positioning the at least one wire end (12a-12d) or for positioning several wire ends (12a-12d) relative to each other, wherein the elements (36, 40) are movable relative to each other in a circumferential direction or a radial direction of the positioning and tensioning device (10), wherein the first and the second recess (48, 50) at least partially overlap each other in such a way that the at least one wire end (12a, 12b) is receivable within the first and second recesses (48, 50), and edgings (52) of the first and second recesses (48, 50) approach or move away from one another in the course of the relative movement in the circumferential direction or radial direction, wherein at least one edging (52) on at least one of the first and second recesses (48, 50) extends at least partially obliquely between a narrower (54) region and a wider (56) region of the at least one recess (48, 50) to form the at least one oblique guide (44, 66, 70).

2. Positioning and tensioning device (10) according to claim 1, **characterized in that**
2.1 the at least one inclined guide (44, 46), upon relative movement in the circumferential direction of the positioning and tensioning device (10), causes the at least one wire end (12a-12d) to be guided in a radial direction and/or
2.2 a first oblique guide (44), which extends in a circumferential direction of the positioning and tensioning device (10) and in a radial direction, and a further oblique guide (70), which extends in an axial direction and in a radial direction, are provided.

3. Positioning and tensioning device according to any one of the preceding claims, **characterized in that**
3.1 opposite edgings (52) of one or at least one of the recesses (48, 50) form a funnel-shaped oblique insertion region (58)
and/or
3.2 at least one first edging (52) of the first recess (48) extends at least partially obliquely and at least one first edging (52) of the second recess (50) overlapping the first edging extends at least partially obliquely, the directions of inclination of the obliquely extending regions of the first edging (52) of the first and second recesses (48, 50) being opposite, and/or
3.3 opposing edgings (52) of the first recess (48) form a first funnel-shaped oblique insertion region (58, 70) and opposing edgings (52) of the second recess (50) form a second funnel-shaped oblique insertion region (58, 44), the oblique insertion regions (58) being arranged opposite one another, and/or
3.4 the at least one at least partially obliquely extending edging (52) is a circumferentially extending edging (52).

4. Positioning and tensioning device (10) according to any one of the preceding claims, **characterized in that**
4.1 the first and/or the second element (36, 40) are formed as a disk or annular disk or as a disk segment and/or
4.2 the first and/or the second element (36, 40) are rotatable relative to each other about a common axis of rotation and/or
4.3 a plurality of first and second recesses (48, 50) are arranged distributed around an axis, a plurality of first and/or second elements (36, 40) being provided which are movable relative to one another radially with respect to the axis.

5. Positioning and tensioning device (10) according to any one of the preceding claims, **characterized in that**
the catching device (32) is designed as a single device for handling one wire end (12a - 12d) or one pair of wire ends (12a - 12d) or as a multiple device for simultaneously handling a plurality of wire ends (12a - 12d) or a plurality of pairs of wire ends (12a - 12d).

6. Positioning and tensioning device (10) according to any one of the preceding claims, **characterized in that**
6.1 the catching device (32) is designed for fixing and tensioning the at least one wire end (12a - 12d) and/or
6.2 in addition to the catching device (32), a fixing and tensioning device (34) is further provided for fixing and tensioning the at least one wire end (12a - 12d) pre-positioned by means of the catching device (32) and/or
6.3 an insertion aid device (68) for axial insertion of wire ends (12a - 12d) into recesses (48, 50) of the positioning and tensioning device (10) is provided with at least one insertion aid extending in the axial direction and/or an insertion slope (70) extending in the axial direction and/or an insertion funnel extending in the axial direction.

7. Positioning and tensioning device (10) according to claim 6, **characterized in that**
7.1 the fixing and tensioning device (34) comprises a fixing and tensioning element (60) movable relative to the catching device (32) for fixing and tensioning the at least one wire end (12a- 12d) between the catching device (32) and the fixing and tensioning element (60) and/or
7.2 the fixing and tensioning device (34) comprises a fixing and tensioning element (60, 36) and a counter support (62, 40) which are movable relative to each other for fixing and tensioning the at least one wire end (12a - 12d) therebetween and/or
7.3 the fixing and tensioning device (34) comprises a movably driven plunger (64) as fixing and tensioning element and/or
7.4 the fixing and tensioning device (34) is designed as a single device for handling one wire end (12a - 12d) or one pair of wire ends (12a - 12d) or as a multiple device for simultaneously handling a plurality of wire ends (12a - 12d) or a plurality of pairs of wire ends (12a - 12d) and/or
7.5 the catching device (32) and the fixing and tensioning device (34) are provided with a common drive (38) or coupled drives for performing the catching, pre-positioning, fixing and tensioning in the course of a movement or that the catching device (32) and the fixing and tensioning device (34) are movable independently of each other and/or
7.6 the insertion aid device (68) is of stationary design and the catching device (32) and/or the fixing and tensioning device (34) has at least one element (36, 40) which can be moved or rotated relative to the insertion aid device (68) and/or
7.7 the insertion aid device (68) is designed as a single device for handling one wire end (12a - 12d) or one pair of wire ends (12a - 12d) or as a multiple device for simultaneously handling a plurality of wire ends (12a - 12d) or a plurality of pairs of wire ends (12a - 12d).

8. Manufacturing device for manufacturing a machine element (14) of an electrical machine, comprising a positioning and tensioning device (10) according to one of the preceding claims and a processing device (26), in particular welding device (28), cutting device and/or forming device for processing the at least one tensioned wire end (12a - 12d).

9. Positioning and tensioning method, which can be carried out by means of a positioning and tensioning device (10) according to any one of claims 1 to 7, for positioning and tensioning at least one wire end (12a - 12d) for further processing in the course of manufacturing a machine element (14) of an electrical machine, **characterized by** the steps of
a) catching and positioning the at least one wire end (12a - 12d) by means of at least one oblique guide (44, 66, 70) for guiding the at least one wire (12a - 12d), via which the at least one wire end (12a - 12d) is brought into an exact position, and
b) fixing and tensioning the at least one wire end (12a - 12d).

10. Positioning and tensioning method according to claim 9,
**characterized in that**
step a) comprises at least one, several or all of the steps:
a1) catching the at least one wire end (12a - 12d), bringing the wire ends (12a - 12d) closer to each other in a pre-position, and holding the at least one wire end (12a - 12d) in the pre-position;
a2) relatively moving a first element (36) having at least one first recess (48) and a second element (40) having at least one second recess (50),
a3) catching and positioning between mutually moving edgings (52) of the first and second recesses (48, 50), at least one of the relatively moving edgings (52) being at least partially oblique;
a4) catching and positioning by means of an insertion slope (58); and/or
a5) catching and positioning between opposing funnel-shaped inclined edgings (52); and/or
a6) catching and positioning by means of insertion slopes (58, 44; 58, 66) or insertion funnels extending in opposite directions and moving in opposite directions relative to one another.

11. Positioning and tensioning method according to any one of claims 9 or 10, **characterized in that**
individual wire ends (12a - 12d) or pairs of wire ends (12a - 12d) are positioned and tensioned individually or
a group of several individual wire ends (12a - 12d) or several pairs of wire ends (12a - 12d) are jointly positioned or tensioned.

12. Positioning and tensioning method according to any one of claims 9 to 11, **characterized in that**
step a) is performed for catching and pre-positioning the at least one wire end (12a - 12d) and further comprises step b) of fixing and tensioning the at least one pre-positioned wire end (12a - 12d).

13. Positioning and tensioning method according to any one of claims 9 to 12, **characterized in that**
13.1 step b) comprises
b1) bringing the at least one wire end (12a - 12d) pre-positioned in step a) into its desired position for further processing and/or
b2a) applying a tensioning force to the at least one wire end (12a - 12d) between a first and a second element (36, 40) of a catching device (32), wherein the elements (36, 40) are movable relative to one another or rotatable relative to one another and wherein the at least one inclined guide (44, 66, 70) is provided on at least one of the elements (36, 40) of the catching device (32) or
b2b) applying a tensioning force to the at least one wire end (12a - 12d) between a catching device (32) designed for carrying out step a) and a fixing and tensioning element (60 36, 40) movable with respect thereto or
b2c) applying a tensioning force to the at least one wire end (12a - 12d) between a fixing and tensioning element (60, 36) provided separately from a catching device (32) for carrying out step a) and a counter support (62, 40) provided separately and/or
13.2 that steps a) and b) are carried out in a common movement or in separate movements.

14. Method for connecting wire ends in the course of manufacturing an electrical machine, comprising carrying out a positioning and tensioning method according to any one of claims 9 to 13 and connecting the tensioned wire ends (12a - 12d), in particular by means of welding.

15. Method according to claim 14, **characterized in that** the wire ends (12a - 12d) of hairpins are connected in the course of manufacturing a stator (16) of an electrical machine.

## Revendications

1. Dispositif de positionnement et de tension (10) d'au moins une extrémité de fil (12a-12d) qui fait saillie d'un élément de machine (14) par rapport auquel le dispositif de positionnement et de tension (10) est mobile dans la direction d'une extension d'extrémité de fil, en vue d'un traitement ultérieur au cours d'une fabrication de l'élément de machine (14) d'une machine électrique,
comprenant:
un dispositif de saisie (32) pour saisir, positionner, tendre et fixer ladite au moins une extrémité de fil (12a-12d) ou au moins pour saisir et pré-positionner ladite au moins une extrémité de fil (12a-12d) afin de fixer et de tendre ladite au moins une extrémité de fil (12a-12d) ainsi pré-positionnée par un dispositif de fixation et de tension (34), le dispositif de saisie (32) comprenant un premier élément (36) avec un premier évidement (48) et un deuxième élément (40) avec un deuxième évidement (50), **caractérisé en ce que**
le dispositif de saisie (32) présente au moins un dispositif de guidage oblique (44, 66, 70) pour le positionnement de ladite au moins une extrémité de fil (12a-12d) ou pour le positionnement relatif de plusieurs extrémités de fil (12a-12d) l'une par rapport à l'autre, les éléments (36, 40) étant mobiles l'un par rapport à l'autre dans une direction périphérique ou une direction radiale du dispositif de positionnement et de tension (10), le premier et le deuxième évidement (48, 50) se chevauchant au moins partiellement de telle sorte que ladite au moins une extrémité de fil (12a, 12b) peut être logée à l'intérieur du premier et du deuxième évidement (48, 50) et que des bords (52) du premier et du deuxième évidement (48, 50) se rapprochent ou s'éloignent l'un de l'autre au cours du mouvement relatif dans la direction circonférentielle ou dans la direction radiale,
lequel au moins un bord (52) sur l'un au moins du premier et du deuxième évidement (48, 50) s'étendant au moins partiellement en oblique entre une zone plus étroite (54) et une zone plus large (56) dudit au moins un évidement (48, 50) pour former ledit au moins un dispositif de guidage oblique (44, 66, 70).

2. Dispositif de positionnement et de tension (10) selon la revendication 1, **caractérisé en ce que**
2.1 ledit au moins un dispositif de guidage oblique (44, 46), lors d'un mouvement relatif dans la direction périphérique du dispositif de positionnement et de tension (10), provoque un guidage de ladite au moins une extrémité de fil (12a-12d) dans une direction radiale et/ou
2.2 **en ce que** sont prévus un premier dispositif de guidage oblique (44), qui s'étend dans une direction périphérique du dispositif de positionnement et de tension (10) et dans une direction radiale, et un autre dispositif de guidage oblique (70), qui s'étend dans une direction axiale et dans une direction radiale.

3. Dispositif de positionnement et de tension (10) selon l'une quelconque des revendications précédentes,
**caractérisé en ce que**
3.1 des bords opposés (52) d'un ou d'au moins un des évidements (48, 50) forment une zone oblique d'introduction en forme d'entonnoir (58) et/ou
3.2 au moins un premier bord (52) du premier évidement (48) s'étend au moins partiellement en oblique et au moins un premier bord (52) du deuxième évidement (50) recouvrant le premier bord s'étend au moins partiellement en oblique, les directions d'inclinaison des zones s'étendant en oblique du premier bord (52) du premier et du deuxième évidement (48, 50) étant opposées, et/ou
3.3 des bords opposés (52) du premier évidement (48) forment une première zone inclinée d'insertion en forme d'entonnoir (58, 70) et des bords opposés (52) du deuxième évidement (50) forment une deuxième zone inclinée d'insertion en forme d'entonnoir (58, 44), les zones obliques d'insertion (58) étant disposées de manière opposée l'une à l'autre, et/ou
3.4 ledit au moins un bord (52) s'étendant au moins partiellement en oblique est un bord (52) s'étendant dans la direction circonférentielle.

4. Dispositif de positionnement et de tension (10) selon l'une quelconque des revendications précédentes,
**caractérisé en ce que**
4.1 le premier et/ou le deuxième élément (36, 40) sont réalisés sous forme de disque ou de disque annulaire ou de segment de disque et/ou 4.2 le premier et/ou le deuxième élément (36, 40) peuvent être tournés l'un par rapport à l'autre autour d'un axe de rotation commun et/ou
4.3 une pluralité de premiers et de seconds évidements (48, 50) sont répartis autour d'un axe, plusieurs premiers et/ou seconds éléments (36, 40) étant prévus, qui sont mobiles les uns par rapport aux autres radialement par rapport à l'axe.

5. Dispositif de positionnement et de tension (10) selon l'une quelconque des revendications précédentes, **caractérisé en ce que**
le dispositif de saisie (32) est conçu comme un dispositif individuel pour la manipulation d'une extrémité de fil (12a - 12d) ou d'une paire d'extrémités de fil (12a - 12d) ou comme un dispositif multiple pour la manipulation simultanée d'une pluralité d'extrémités de fil (12a - 12d) ou d'une pluralité de paires d'extrémités de fil (12a - 12d).

6. Dispositif de positionnement et de tension (10) selon l'une quelconque des revendications précédentes, **caractérisé en ce que**
6.1 le dispositif de saisie (32) est conçu pour fixer et tendre l'au moins une extrémité de fil (12a - 12d) et/ou
6.2 il est prévu, en plus du dispositif de saisie (32), un dispositif de fixation et de tension (34) pour fixer et tendre l'au moins une extrémité de fil (12a - 12d) pré-positionnée au moyen du dispositif de saisie (32) et/ou
6.3 il est prévu un dispositif d'aide à l'introduction (68) pour l'introduction axiale d'extrémités de fil (12a - 12d) dans des évidements (48, 50) du dispositif de positionnement et de tension (10) avec au moins une aide à l'introduction s'étendant dans la direction axiale et/ou un biseau d'introduction (70) s'étendant dans la direction axiale et/ou un entonnoir d'introduction s'étendant dans la direction axiale.

7. Dispositif de positionnement et de tension (10) selon la revendication 6, **caractérisé en ce que**
7.1 le dispositif de fixation et de tension (34) présente un élément de fixation et de tension (60) mobile par rapport au dispositif de saisie (32) pour fixer et tendre l'au moins une extrémité de fil (12a - 12d) entre le dispositif de saisie (32) et l'élément de fixation et de tension (60) et/ou
7.2 le moyen de fixation et de tension (34) présente un élément de fixation et de tension (60, 36) et un contre-support (62, 40) qui sont mobiles l'un par rapport à l'autre pour fixer et tendre ladite au moins une extrémité de fil (12a - 12d) entre eux, et/ou
7.3 le dispositif de fixation et de tension (34) présente comme élément de fixation et de tension un poinçon (64) entraîné de manière mobile et/ou
7.4 le dispositif de fixation et de tension (34) est conçu comme un dispositif individuel pour la manipulation d'une extrémité de fil (12a - 12d) ou d'une paire d'extrémités de fil (12a - 12d) ou comme un dispositif multiple pour la manipulation simultanée d'une pluralité d'extrémités de fil (12a - 12d) ou d'une pluralité de paires d'extrémités de fil (12a - 12d) et/ou
7.5 le dispositif de saisie (32) et le moyen de fixation et de tension (34) sont pourvus d'un entraînement commun (38) ou d'entraînements couplés pour effectuer la saisie, le pré-positionnement, la fixation et la tension au cours d'un mouvement ou le dispositif de saisie (32) et le moyen de fixation et de tension (34) sont mobiles indépendamment l'un de l'autre et/ou
7.6 le dispositif d'aide à l'introduction (68) est conçu de manière stationnaire et le dispositif de saisie (32) et/ou le dispositif de fixation et de tension (34) présente au moins un élément (36, 40) mobile ou rotatif par rapport au dispositif d'aide à l'introduction (68) et/ou
7.7 le dispositif d'aide à l'introduction (68) est conçu comme un dispositif individuel pour la manipulation d'une extrémité de fil (12a - 12d) ou d'une paire d'extrémités de fil (12a - 12d) ou comme un dispositif multiple pour la manipulation simultanée d'une pluralité d'extrémités de fil (12a - 12d) ou d'une pluralité de paires d'extrémités de fil (12a - 12d).

8. Dispositif de fabrication pour la fabrication d'un élément de machine (14) d'une machine électrique, comprenant un dispositif de positionnement et de tension (10) selon l'une des revendications précédentes et un dispositif d'usinage (26), en particulier un dispositif de soudage (28), un dispositif de coupe et/ou un dispositif de formage pour l'usinage de ladite au moins une extrémité de fil tendue (12a - 12d).

9. Procédé de positionnement et de tension réalisable au moyen d'un dispositif de positionnement et de tension (10) selon l'une des revendications 1 à 7, pour positionner et tendre au moins une extrémité de fil (12a - 12d) pour un traitement ultérieur au cours de la fabrication d'un élément de machine (14) d'une machine électrique, **caractérisé par** les étapes suivantes:
a) saisie et positionnement de l'au moins une extrémité de fil (12a - 12d) au moyen d'au moins un dispositif de guidage oblique (44, 66, 70) pour guider l'au moins un fil (12a - 12d), par lequel l'au moins une extrémité de fil (12a - 12d) est amenée dans une position exacte, et
b) fixer et tendre l'au moins une extrémité de fil (12a - 12d).

10. Procédé de positionnement et de tension selon la revendication 9,
**caractérisé en ce que**
l'étape a) comprend au moins une, plusieurs ou toutes les étapes:
a1) saisir ladite au moins une extrémité de fil (12a - 12d), rapprocher lesdites extrémités de fil (12a - 12d) l'une vers l'autre dans une préposition et
maintenir ladite au moins une extrémité de fil (12a - 12d) dans ladite préposition;
a2) déplacer de manière relative un premier élément (36) avec au moins un premier évidement (48) et un deuxième élément (40) avec au moins un deuxième évidement (50),
a3) saisir et positionner entre des bords (52) des premier et deuxième évidements (48, 50) qui se déplacent l'un par rapport à l'autre, au moins un des bords (52) qui se déplacent relativement étant au moins partiellement oblique;
a4) saisir et positionner au moyen d'une rampe d'introduction (58); et/ou a5) saisir et positionner entre des bords obliques (52) opposées en forme d'entonnoir et/ou
a6) saisir et positionner au moyen des rampes d'introduction (58, 44 ; 58, 66) ou d'entonnoirs d'introduction s'étendant en sens inverse et se déplaçant en sens inverse les uns par rapport aux autres.

11. Procédé de positionnement et de tension selon l'une quelconque des revendications 9 ou 10,
**caractérisé en ce que**
des extrémités de fil individuelles (12a - 12d) ou des paires d'extrémités de fil (12a - 12d) sont positionnées et tendues individuellement ou
qu'un groupe de plusieurs extrémités de fil individuelles (12a - 12d) ou de plusieurs paires d'extrémités de fil (12a - 12d) sont positionnées ou tendues ensemble.

12. Procédé de positionnement et de tension selon l'une quelconque des revendications 9 à 11,
**caractérisé en ce que**
l'étape a) est effectué pour saisir et pré-positionner ladite au moins une extrémité de fil (12a - 12d) et l'étape b) comprend on outre la fixation et tension de ladite au moins une extrémité de fil pré-positionnée (12a - 12d).

13. Procédé de positionnement et de tension selon l'une quelconque des revendications 9 à 12,
**caractérisé en ce que**
13.1 l'étape b) comprend:
b1) amener ladite au moins une extrémité de fil (12a - 12d) pré-positionnée à l'étape a) dans sa position souhaitée pour le traitement ultérieur et/ou b2a) appliquer une force de tension sur l'au moins une extrémité de fil (12a - 12d) entre un premier et un deuxième élément (36, 40) d'un dispositif de saisie (32), les éléments (36, 40) étant mobiles l'un par rapport à l'autre ou pouvant tourner l'un par rapport à l'autre et l'au moins un dispositif de guidage oblique (44, 66, 70) étant prévu sur au moins l'un des éléments (36, 40) du dispositif de saisie (32) ou
b2b) appliquer une force de tension sur l'au moins une extrémité de fil (12a - 12d) entre un dispositif de saisie (32) conçu pour réaliser l'étape a) et un élément de fixation et de tension (60 36, 40) mobile par rapport à celui-ci ou
b2c) appliquer une force de tension sur ladite au moins une extrémité de fil (12a - 12d) entre un élément de fixation et de tension (60, 36) prévu séparément d'un dispositif de saisie (32) pour l'exécution de l'étape a) et un contre-support (62, 40) prévu séparément et/ou
13.2 **en ce que** les étapes a) et b) sont exécutées dans un mouvement commun ou dans des mouvements séparés.

14. Procédé pour relier des extrémités de fils au cours de la fabrication d'une machine électrique, comprenant la mise en oeuvre d'un procédé de positionnement et de tension selon l'une quelconque des revendications 9 à 13 et la liaison des extrémités de fils (12a à 12d) tendues, notamment par soudage.

15. Procédé selon la revendication 14, **caractérisé en ce que** les extrémités de fil (12a - 12d) de hairpins sont reliées au cours de la fabrication d'un stator (16) d'une machine électrique.
